# EUROPEAN PATENT SPECIFICATION

(11) **EP 2 996 875 B1**
(45) Date of publication and mention of the grant of the patent: **15.11.2017**
(21) Application number: 14724721.7
(22) Date of filing: 14.05.2014
(51) Int. Cl.: B32B 27/32, C08J 5/18, C08L 23/10, C08L 23/12, B32B 27/08, B32B 27/30, B32B 27/34

(54) **BLEND AND FILM EXHIBITING RESISTANCE TO INK ABRASION**
MISCHUNG UND SCHICHT MIT FESTIGKEIT GEGEN TINTENABRIEB
MÉLANGE ET FILM PRÉSENTANT UNE RÉSISTANCE À L'ABRASION D'ENCRE

(30) Priority: 16.05.2013 EP 13168086
(43) Date of publication of application: 23.03.2016
(73) Proprietor: Cryovac, Inc., Duncan, SC 29334-0464 (US)
(72) Inventor: SPIGAROLI, Romano, 20025 Legnano (MI) (IT)
(74) Representative: Fraire, Cristina
(86) International application number: PCT/EP2014/059878
(87) International publication number: WO 2014/184258

(56) References cited:
- EP-A2- 0 738 589
- WO-A1-2012/068727
- US-A1- 2006 199 906

## Description

### Background

The present invention relates to printable blends and printable films, particularly multilayer packaging films. Printed articles, such as printed films, are used to make various packaging articles, such as bags, pouches and the like, in particular for use in packaging a wide variety of products, including food. Such packaging films include multilayer films with a first outer layer which serves as a heat seal layer sealed to itself or another component of the package during packaging of a product, or sealed to itself during conversion of the film to a packaging article that is thereafter used in the packaging of a product. The first outer seal layer is designed to provide a strong heat seal to itself or another component of the package. The second outer layer has an outside surface that makes up at least a portion of the outside surface of the package containing the product. The second outer layer is designed to withstand exposure to a hot element of the heat sealing device applied during conversion of the film to the packaging article and/or applied during the packaging of the product.

The heat seal layer is usually designed to seal at relatively low temperature, and the second outer layer is designed not to melt or otherwise be adversely affected by exposure to the heat from the heat sealing device. The second outer layer is generally made from a polymer having a higher melting point than the polymer from which the first outer seal layer is made. Propylene-based polymers, such as propylene/ethylene copolymer and propylene/ethylene/butene terpolymer are preferred polymers for use in the second outer layer of multilayer heat-shrinkable packaging films, due to their low cost and temperature resistance. Propylene-based polymers can withstand the application of heat which passes through the thickness of the film to melt the heat seal layer in effecting a heat seal of the film to itself or another component of the package.

It is desirable to make a package from a heat-shrinkable packaging film having an outer layer having ink printed thereon. However, it has been found that ink printed onto an outer film layer made from propylene/ethylene copolymer and/or propylene/ethylene/butene terpolymer does not withstand abuse without the ink abrading off of to an undesirable degree. It would be desirable to develop a heat-shrinkable multilayer packaging film having a printable outer layer containing propylene/ethylene copolymer and/or propylene/ethylene/butene terpolymer in which the ink withstands abrasion during processing of the film during converting and packaging, as well as during handling, transport, and use of the packaged product.

### Summary of the Invention

It has been discovered that in a ink abrasion resistance can be enhanced using a blend of (i) an olefin block copolymer (OBC) with (ii) a propylene-based polymer, for example, propylene homopolymer and/or propylene copolymer including propylene/ethylene copolymer (PE cop) and/or propylene/ethylene/butene terpolymer (PEB). The presence of the blend in a printed outer layer of a multilayer film has been found to provide ink abrasion-resistance during processing of the film during converting and packaging, as well as during handling, transport, and use of the film in the making of a packaged product.

A first aspect is directed to a polymer blend comprising (i) a propylene-based homopolymer or copolymer in an amount of from 75 to 95 weight percent, based on total blend weight, and (ii) an olefin block copolymer in an amount of from 5 to 25 weight percent, based total blend weight. The olefin block copolymer is an ethylene/C₃₋₂₀ α-olefin copolymer having a density of from 0.85 to 0.89 g/cm³ and a melt index of from 0.5 g/10 min to 10 g/10 min. In an embodiment, the olefin block copolymer has an M_{w}/Mₙ of at least 1.7 and has hard segments and soft segments with the hard segments making up from 10 to 40 weight percent based on total olefin block copolymer weight and the hard segments having a comonomer content of less than 3 mole percent, with the soft segments having a comonomer content of from 14 to 28 mole percent.

A second aspect is directed to a printed, ink-abrasion resistant multilayer film comprising a first outer layer which is a seal layer, and a second outer layer comprising a blend of (i) a propylene-based homopolymer or copolymer in an amount of from 75 to 95 weight percent, based on total layer weight, and (ii) an olefin block copolymer in an amount of from 5 to 25 weight percent, based on total layer weight, the olefin block copolymer being an ethylene/ C₃₋₂₀α-olefin copolymer having a density of from 0.85 to 0.89 g/cm³ and a melt index of from 0.5 g/10 min to 10 g/10 min, with the outer surface of the second outer layer having printing thereon. In an embodiment, the olefin block copolymer has an M_{w}/Mₙ of at least 1.7, the olefin block copolymer having hard segments and soft segments with the hard segments making up from 10 to 40 weight percent based on total olefin block copolymer weight and the hard segments having a comonomer content of less than 3 mole percent, with the soft segments having a comonomer content of from 14 to 28 mole percent.

In an embodiment, the blend contains the propylene-based homopolymer or copolymer in an amount of from 75 to 90 weight percent, based on total layer weight, and the olefin block copolymer in an amount of from 10 to 25 weight percent, based on total layer weight, and the olefin block copolymer is an ethylene/C₄₋₁₂ α-olefin copolymer having a density of from 0.870 to 0.884 g/cm³ and a melt index of from 0.8 g/10 min to 7 g/10 min, with the olefin block copolymer having hard segments and soft segments, with the hard segments making up from 15 to 30 weight percent based on total olefin block copolymer weight and the hard segments having a comonomer content of less than 2 mole percent, with the soft segments having a comonomer content of from 15 to 20 mole percent.

In an embodiment, the blend contains the propylene-based homopolymer or copolymer in an amount of from 75 to 85 weight percent, based on total layer weight, and the olefin block copolymer in an amount of from 15 to 25 weight percent, based on total layer weight, and the olefin block copolymer is an ethylene/ C₆₋₈ copolymer having a density of from 0.875 to 0.879 g/cm³ and a melt index of from 0.9 g/10 min to 6 g/10 min, and an Mw/Mn of from 1.7 to 3.5, with the olefin block copolymer having hard segments and soft segments with the hard segments making up from 23 to 27 weight percent based on total olefin block copolymer weight and the hard segments having a comonomer content of less than 1 mole percent, with the soft segments having a comonomer content of from 17 to 19 mole percent.

In an embodiment, the olefin block copolymer is an ethylene/octene copolymer having a density of from 0.876 to 0.878 g/cm³ and a melt index of about 4.8 to 5.2 g/10 min.

In an embodiment, the olefin block copolymer is an ethylene/octene copolymer having a density of from 0.876 to 0.878 g/cm³ and a melt index of about 0.9 to 1.1 g/10 min.

In an embodiment, the printing comprises a nitrocellulose/polyurethane ink.

In an embodiment, the multilayer film further comprises an inner film layer which is between the first and second outer layers, wherein the inner film layer comprises a second blend comprising from 10% to 60% by weight of at least one polymer A selected from the group consisting of ethylene-unsaturated ester copolymers, ethylene-unsaturated acid copolymer and ionomer resin, and from 5% to 50% by weight of at least one polymer B selected among ethylene/α-olefin copolymers having a density from 0.868 to 0.910 g/cm³, preferably from 0.868 to 0.905 g/cm³, and from 30% to 65% by weight of at least a polymer C selected among ethylene/α-olefin copolymers having a density from 0.912 to 0.935 g/cm³, preferably from 0.912 to 0.925 g/cm³ wherein said polymer C has a bimodal molecular weight distribution or is a long-chain branched polymer.

In an embodiment, the second polymer blend comprises from 30% to 50% by weight, preferably from 20% to 55% by weight, of the polymer A, and from 10% to 30%, preferably from 7% to 40% by weight of the polymer B, and from 35% to 60% by weight, preferably from 40% to 50%, of the polymer C.

In an embodiment, the melt flow index (MFI, measured according to ASTM D1238 at 190°C and 2.16 Kg) of said polymer B is from 0.5 to 5 g/10min, preferably from 1.0 to 3.0 g/10min, and/or the melt flow index (MFI) of said polymer C is from 0.5 to 5 g/10min, preferably from 1.0 to 3.0 g/10min.

In an embodiment, the percentage by weight of the second polymer blend with respect to the whole film is from 5% to 60%, or 10% to 40%, or from 20% to 35%.

In an embodiment, the first outer heat sealable layer comprises a polymer selected among ethylene-vinyl acetate copolymers (EVA), homogeneous or heterogeneous linear ethylene/α-olefin copolymers and blends thereof.

In an embodiment, the O₂-transmission rate (OTR, evaluated at 23°C and 0 % R.H. according to ASTM D-3985) is in the range from 1000 and 10000 cm³/m² 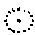 day 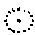 atm.

In an embodiment, the film further comprising an internal gas barrier layer comprising at least one gas barrier polymer selected among vinylidene chloride copolymers (PVDC), ethylene-vinyl alcohol copolymers (EVOH), polyamides and acrylonitrile-based copolymers and blends thereof.

In an embodiment, the O₂-transmission rate (OTR, evaluated at 23°C and 0 % R.H. according to ASTM D-3985) is lower than 100 cm³/m² 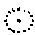 day 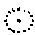 atm, preferably lower than 80 cm³/m² 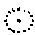 day 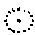 atm.

In an embodiment, O₂-transmission rate (OTR, evaluated at 23°C and 0 % R.H. according to ASTM D-3985) is from 100 to 500 cm³/m² 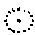 day 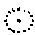 atm, preferably from 150 to 450 cm³/m² 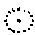 day 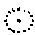 atm.

In an embodiment, the film exhibits a percentage of free shrink at 85°C (ASTM D2732) in at least one or in both directions higher than 5%, or higher than 10%, or higher than 15%, or higher than 20%.

In an embodiment, the film is a six layer film comprising a first outer sealable layer, a second inner layer comprising the blend according to anyone of claims 1 to 3, third and fifth tie layers, a fourth gas barrier layer, and a sixth outer abuse layer.

A third aspect is directed to a packaging article in the form of a seamless film tubing in accordance with the second aspect, which film comprises the blend according to the first aspect, with the first outer heat seal layer being the innermost layer of the tubing. Alternatively, the packaging article is in the form of a flexible container obtained by heat-sealing to itself a film according to the second aspect, which film comprises the blend according to the first aspect.

A fourth aspect is directed to a food product packaged in a packaging article according to the third aspect, which packaging article comprises a film in accordance with the second aspect, and which film comprises a blend in accordance with the first aspect.

In an embodiment, the product is selected from meat, poultry, cheese, processed and smoked meat, pork and lamb.

### BRIEF DESCRIPTION OF THE DRAWINGS

FIG. 1 is a schematic cross-sectional view of a two-layer film according to the present invention.
FIG. 2 is a schematic cross-sectional view of a three-layer film according to the present invention.
FIG. 3 is a schematic cross-sectional view of a six-layer film according to the present invention.
FIG. 4 is a schematic of a process for making a multilayer film in accordance with the present invention.
FIG. 5 is a schematic of a horizontal form fill and seal packaging process for use in making a packaged product including the packaging article of the invention.

### Detailed Description

As used herein, the term "film" refers to plastic web, regardless of whether it is film or sheet or tubing. As used herein, the terms "inner layer" and "internal layer" refer to any film layer having both of its principal surfaces directly adhered to another layer of the film. As used herein, the phrase "outer layer" or "external layer" refers to any film layer having only one of its principal surfaces directly adhered to another layer of the film. As used herein, the phrases "seal layer", "sealing layer", "heat seal layer", and "sealant layer", refer to an outer film layer involved in the sealing of the film to itself, to another layer of the same or another film, and/or to another article which is not a film. As used herein, the phrases "tie layer" and "adhesive layer" refer to any inner film layer having the primary purpose of adhering two layers to each other.

As used herein, the phrases "machine direction", herein abbreviated "MD," and "longitudinal direction", herein abbreviated "LD", refer to a direction "along the length" of the film, i.e., in the direction of the extrusion of the film. As used herein, the phrase "transverse direction", herein abbreviated "TD", refers to a direction across the film, perpendicular to the machine or longitudinal direction.

As used herein, the term "adhered" refers to film layers having a principal surface directly or indirectly (via one or more additional layers between them) in contact with one another via coextrusion, extrusion coating, or lamination via adhesive. As used herein, film layers which are "directly adhered" have a principal surface in direct contact with one another, without an adhesive or other layer between them. As used herein, a layer specified as being "between" two other layers includes direct adherence of the specified layer to both other layers, direct adherence of the specified layer to the first of the other layers and indirect adherence of the specified layer to the second of the other layers, as well as indirect adherence of the principal layer to both other layers.

As used herein, the phrase "gas barrier layer" refers to a layer containing a resin that limits the passage of one or more gases (e.g. oxygen, carbon dioxide, etc) through the layer. As used herein, the phrase "barrier layer" refers to a layer made from a polymer that serves as a barrier to the transmission of O₂, evaluated at 23°C and 0 % relative humidity. An oxygen barrier layer can provide an oxygen transmission rate, according to ASTM D-3985, of less than 500 cm³/m² 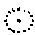 day 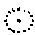 atm, preferably lower than 100 cm³/m² 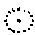 day 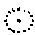 atm.

As used herein, the phrases "flexible container" and "packaging article", are inclusive of end-seal bags, side-seal bags, L- seal bags, U-seal bags (also referred to as "pouches"), gusseted bags, backseamed tubings, and seamless casings. As used herein, the term "bag" refers to a packaging container having an open top, side edges, and a bottom edge. The term "bag" encompasses lay-flat bags, pouches, and casings, including seamless casings and backseamed casings, the latter including lap-sealed casings, fin-sealed casings, and butt-sealed backseamed casings having backseaming tape thereon. Various bag and casing configurations are disclosed in USPN 6,764,729 and USPN 6,790,468 (both of which are hereby incorporated, in their entireties, by reference thereto) including L-seal bags, backseamed bags, and U-seal bags.

As used herein, the phrase "seamless tubing" refers to a tubing in the absence of a heat seal running the length of the tubing. Seamless tubing is generally made by extrusion through a round die.

The first outer layer is the inside layer of the tubing and serves as the heat-sealing layer for the sealing of the inside layer to itself (or another component of the packaging article if the tubing is slit open), including bags, casings, backseamed pouches, etc. The heat-seal layer can be sealed to itself in the making of end-seal bags, side-seal bags, fin-sealed casings, U-seal bags, etc.

As used herein, the phrase "process stability" is interchangeable with the term "processability" and refers to the stability of the film during manufacturing, at extrusion, orientation and converting levels.

As used herein, the term "oriented" refers to a thermoplastic web which has been elongated, at a temperature above the softening temperature, in either one direction ("uniaxial") or two directions ("biaxial"), followed by cooling the film to "set" it while substantially retaining the elongated dimensions. Solid state orientation at a temperature above the softening point produces a film exhibiting heat shrink character upon subsequent heating. Orientation in the melt state, as in the production of a blown film, does not result in a heat shrinkable film. Orientation in both the melt state and the solid state increase the degree of alignment of the polymer chains, thereby enhancing the mechanical properties of the resulting oriented film.

As used herein, the phrases "heat-shrinkable," "heat-shrink," and the like, refer to the tendency of the film to shrink upon the application of heat, i.e., to contract upon being heated, such that the size of the film decreases while the film is in an unrestrained state. Free shrink is measured in accordance with ASTM D 2732, and is the percent dimensional change in a 10 cm x 10 cm specimen of film when subjected to a selected heat, by immersing the specimen for 5 seconds in a heated water bath at 85°C.

The multilayer film according to the present invention can be non-heat-shrinkable or heat-shrinkable. As used herein, the phrase "non-heat-shrinkable" is used with reference to a film exhibiting a free shrink at 85°C of less than 5% in the machine direction (MD) and less than 5% in the transverse direction (TD), with a total (MD+TD) free shrink at 85°C of less than 10%, measured in accordance with ASTM D2732. As used herein, the phrase "heat-shrinkable" is used with reference to a film exhibiting a free shrink at 85°C of at least 5% in at least one direction (MD and/or TD) and with a total (MD+TD) free shrink at 85°C of at least 10%, measured in accordance with ASTM D2732. If heat-shrinkable, the multilayer film can have a free shrink at 85°C of at least 10% in at least one direction (MD and/or TD), or a free shrink at 85°C of at least 10% in each direction (MD and TD), or a free shrink at 85°C of at least 15% in at least one direction (MD and/or TD), or a free shrink at 85°C of at least 20% in at least one direction (MD and/or TD), or a free shrink at 85°C of at least 15% in both directions (MD and TD), or a free shrink at 85°C of at least 20% in both directions (MD and TD).

As used herein, the term "polymer" refers to the product of a polymerization reaction, and is inclusive of homopolymers, and copolymers. As used herein, the term "homopolymer" is used with reference to a polymer resulting from the polymerization of a single monomer, i.e., a polymer consisting essentially of a single type of mer, i.e., repeating unit. As used herein, the term "copolymer" refers to polymers formed by the polymerization reaction of at least two different monomers. For example, the term "copolymer" includes the copolymerization reaction product of ethylene and an α-olefin, such as 1-hexene. When used in generic terms the term "copolymer" is also inclusive of, for example, ter-polymers. The term "copolymer" is also inclusive of random copolymers, block copolymers, and graft copolymers.

As used herein, the term "polyolefin" refers to any polymerized olefin, which can be linear, branched, cyclic, aliphatic, aromatic, substituted, or unsubstituted. Polyolefin includes olefin homopolymer, olefin copolymer, copolymer of an olefin and an non-olefinic co-monomer co- polymerizable with the olefin, such as vinyl monomers, modified polymers thereof, and the like. Specific examples include ethylene homopolymer, propylene homopolymer, butene homopolymer, ethylene/C₄₋₈ α-olefin copolymer, and the like, propylene/α-olefin copolymer, butene/α-olefin copolymer, ethylene/unsaturated ester copolymer (e.g. ethylene/ethyl acrylate copolymer, ethylene/butyl acrylate copolymer, ethylene/methyl acrylate copolymer), ethylene/unsaturated acid copolymer (e.g., ethylene/acrylic acid copolymer, ethylene/methacrylic acid copolymer), ethylene/vinyl acetate copolymer, ionomer resin, polymethylpentene, etc.

As used herein, the phrase "ethylene/α-olefin copolymer" refers to heterogeneous and to homogeneous polymers such as linear low density polyethylene (LLDPE) with a density usually in the range of from about 0.900 g/cm³ to about 0.930 g/cm³, linear medium density polyethylene (LMDPE) with a density usually in the range of from about 0.930 g/cm³ to about 0.945 g/cm³, and very low and ultra low density polyethylene (VLDPE and ULDPE) with a density lower than about 0.915 g/cm³, typically in the range 0.868 to 0.915 g/cm³, and such as metallocene-catalyzed Exact® and Exceed® homogeneous resins obtainable from Exxon, single-site Affinity® resins obtainable from Dow, and Tafmer® homogeneous ethylene/α-olefin copolymer resins obtainable from Mitsui. All these materials generally include copolymers of ethylene with one or more comonomers selected from C₄₋₁₀ α-olefin such as butene-1, hexene-1, octene-1, etc., in which the molecules of the copolymers comprise long chains with relatively few side chain branches or cross-linked structures.

As used herein, the phrase "heterogeneous polymer" or "polymer obtained by heterogeneous catalysis" refers to polymerization reaction products of relatively wide variation in molecular weight and relatively wide variation in composition distribution, i.e., typical polymers prepared, for example, using conventional Ziegler- Natta catalysts, for example, metal halides activated by an organometallic catalyst, i. e., titanium chloride, optionally containing magnesium chloride, complexed to trialkyl aluminum and may be found in patents such as U.S. Patent No. 4,302,565 to Goeke et al. and U.S. Patent No. 4,302,566 to Karol, et al. Heterogeneous catalyzed copolymers of ethylene and an olefin may include linear low-density polyethylene (LLDPE), very low-density polyethylene (VLDPE) and ultra low- density polyethylene (ULDPE). Some copolymers of this type are available from, for example, The Dow Chemical Company, of Midland, Michigan., U.S.A. and sold under the trademark Dowlex® resins.

As used herein, the phrase "homogeneous polymer" or "polymer obtained by homogeneous catalysis" or "single site catalyzed (ssc) polymer" refers to polymerization reaction products of relatively narrow molecular weight distribution and relatively narrow composition distribution. Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. This term includes those homogeneous polymers prepared using metallocenes, or other single-site type catalysts (ssc), as well as those homogenous polymers that are obtained using Ziegler-Natta type catalysts in homogenous catalysis conditions. The copolymerization of ethylene and α-olefins under homogeneous catalysis includes, for example, copolymerization with metallocene catalysis systems which include constrained geometry catalysts, i.e., monocyclopentadienyl transition-metal complexes is described in U.S. Patent No. 5,026,798 to Canich.

Homogeneous ethylene/α-olefin copolymer (homogeneous EAO) includes modified or unmodified linear homogeneous ethylene/α-olefin copolymers marketed as Tafmer® resins by Mitsui Petrochemical Corporation of Tokyo, Japan, and modified or unmodified linear homogeneous ethylene/α-olefin copolymers marketed as Exact® resins by ExxonMobil Chemical Company of Houston, Texas, U.S.A, and modified or unmodified homogeneous ethylene/α-olefin copolymers having a long-chain branching marketed as Affinity@ brand resins by The Dow Chemical Company. As used herein, a "long-chain branched" ethylene/α-olefin copolymer refers to copolymer having branches with a length comparable to the length of the main polymer chain. Long chain branched ethylene/α-olefin copolymer has an l₁₀/l₂ ratio (namely the ratio of melt indices at 10 kg and 2.16 kg) of at least 6, or at least 7, or from 8 to 16.

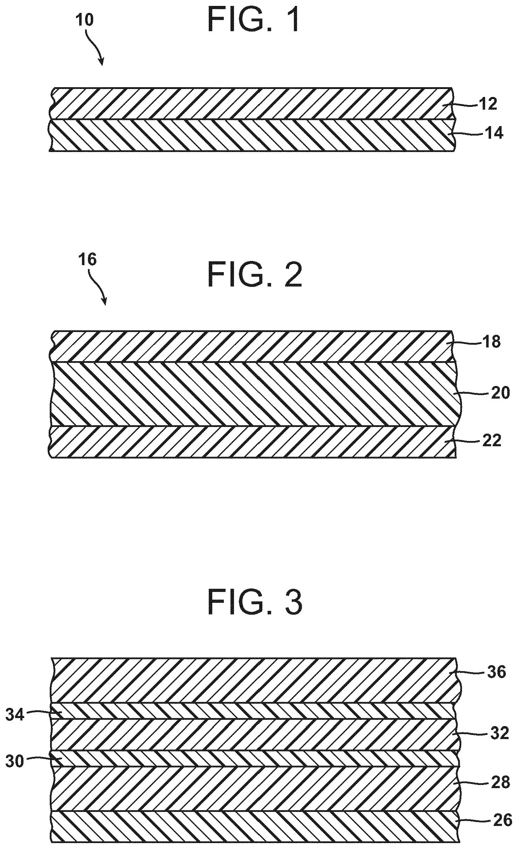

As used herein, the phrase "an ethylene/α-olefin copolymer having a bimodal molecular weight distribution" refers to an ethylene/α-olefin copolymer that includes an ethylene/α-olefin copolymer component with at least one identifiable higher molecular weight, and an ethylene/α-olefin copolymer component with at least one identifiable lower molecular weight. In a graph in which the horizontal axis is expressed as the log of the molecular weight (log MW), a bimodal ethylene/α-olefin copolymer shows at least two peaks, as displayed for instance in FIG. 1 of USPN 7,193,017, which is hereby incorporated in its entirety, by reference thereto. As used herein the phrase "bimodal copolymer" refers to copolymers having a ratio of molecular weight distributions, or polydispersity, M_{w}/Mₙ, in the range from 5 to 20.

As used herein the term "modified polyolefin" is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homopolymer or copolymer, by blending with or grafting to the polymer chain an unsaturated carboxylic acid, e.g., maleic acid, fumaric acid or the like, or a derivative thereof such as the anhydride, ester or metal salt or the like.

Ethylene-unsaturated acid polymers include homopolymers and copolymers having an acrylic acid and/or a methacrylic acid linkage between monomer units. Acrylic acid-based resins may be formed by any method known to those skilled in the art and may include polymerization of acrylic acid, or methacrylic acid in the presence of light, heat, or catalysts such as benzoyl peroxides, or by the esters of these acids, followed by saponification. Examples of acrylic acid-based resins include, but are not limited to, ethylene/acrylic acid copolymer (EAA), ethylene/methacrylic acid copolymer (E/MAA), and blends thereof.

Ethylene-unsaturated ester polymers include homopolymers and copolymers having an ester of acrylic acid linkage between the monomer units. Acrylate-based resins may be formed by any method known to those skilled in the art, such as, for example, polymerization of the acrylate monomer by the same methods as those described for acrylic acid-based resins. Examples of acrylate- based resin include, but are not limited to, methyl/methacrylate copolymer (MMA), ethylene/vinyl acrylate copolymer (EVA), ethylene/methacrylate copolymer (EMA), ethylene/n-butyl acrylate copolymer (EnBA), and blends thereof.

As used herein, the phrase "ethylene/vinyl acetate" (EVA) refers to a copolymer formed from ethylene and vinyl acetate monomers wherein the ethylene units are present in a major amount and the vinyl-acetate units are present in a minor amount. The typical amount of vinyl-acetate may range from about 5 to about 20 weight %.

As used herein the term "ionomer resin" refers to a copolymer based on metal salts of copolymers of ethylene and a vinyl monomer with an acid group, such as methacrylic acid, and are cross-linked polymers in which the linkages are ionic (i.e., interchain ionic bonding) as well as covalent bonds. Ionomer resins have positively and negatively charged groups which are not associated with each other, providing the resin with a polar character. The metal can be in the form of a monovalent or divalent ion such as lithium, sodium, potassium, calcium, magnesium and zinc. Unsaturated organic acids include acrylic acid and methacrylic acid. Unsaturated organic ester includes methacrylate and isobutyl acrylate. Ionomer resin can include a mixture of two or more ethylene/ unsaturated organic acid or ester copolymers.

Tie layers may be disposed between the respective layers in case where a sufficient adhesion is not ensured between adjacent layers. The adhesive resin may preferably comprise one or more polyolefins, one or more modified polyolefins or a blend of the above. Specific, not limitative, examples thereof may include: ethylene- vinyl acetate copolymers, ethylene-(meth)acrylate copolymers, ethylene/α-olefin copolymers, any of the above modified with carboxylic or preferably anhydride functionalities, elastomers, and a blend of these resins.

Additional "core layers" other than the above inner layers can be present in the films of the present invention, "core layer" meaning any other inner film layer that preferably has a function other than serving as an adhesive or compatibilizer for adhering two layers to one another.

The multilayer film has at least two layers, or can have from 2 to 50 layers, or from 3 to 36 layers, or from 4 to 12 layers, or from 5 to 8 layers, or from 6 to 7 layers. The multilayer film has a thickness (before shrinking, if shrinkable) of up to 500 microns (i.e., up to 20 mils), or can have a total thickness of from 10 to 150 microns, or from 20 to 60 microns, or from 25 to 40 microns.

The polymers used for the first outer heat sealing layer are selected to provide high seal strengths and ease of heat sealing. Such polymers include ethylene/unsaturated ester copolymer (e.g., ethylene/vinyl acetate copolymer (EVA) and ethylene/butyl acetate copolymer (EBA)), ionomer resin, olefin homopolymer (e.g., polyethylene, etc), homogeneous ethylene/α-olefin copolymer, heterogeneous ethylene/α-olefin copolymer, and blends thereof. The ethylene/α-olefin copolymers include heterogeneous copolymers such as linear low density polyethylene (LLDPE) having a density of from 0.91 to 0.93 g/cm³, linear medium density polyethylene (LMDPE) having a of from about 0.93 g/cm³ to about 0.945 g/cm³, and very low and ultra low density polyethylene (VLDPE and ULDPE) with a density lower than about 0.915 g/cm³, as well as homogeneous copolymers such as metallocene-catalyzed Exact® and Exceed® homogeneous resins obtainable from Exxon, single-site catalyzed Affinity® resins obtainable from Dow (e.g., Affinity® PL 1281G1 and Affinity® PL 1845G homogeneous ethylene/octene copolymers having limited long chain branching), and Tafmer® homogeneous ethylene/α-olefin copolymer resins obtainable from Mitsui. The Exact®, Exceed®, and Tafmer® resins are copolymers of ethylene with one or more comonomers selected from C₄₋₁₀ α-olefins such as butene-1, hexene-1, octene- 1, etc., comprise long chains with relatively few side chain branches or cross-linked structures. These polymers can be advantageously blended in various percentages to tailor the sealing properties of the films depending on their use in packaging, as known by those skilled in the art. Resins for use in the heat seal layer can have a seal initiation temperature lower than 110°C, or lower than 105°C, or lower than 100°C. The heat-seal layer of the film of the present invention can have a typical thickness of from 2 to 20 microns, or from 3 to 15 microns, or from 3 to 12 microns.

The second outer layer provides heat-resistance during the sealing step, and contains polymer having melting point higher than the melt point of at least one polymer in the heat seal layer, and contains a two-component polymer blend providing improved resistance to ink abrasion. The second outer layer can have a thickness of from 1 to 20 microns, or from 1 to 15 microns, or from 1 to 10 microns.

The two-component blend of the second outer layer is a blend of a propylene-based polymer and an olefin block copolymer (OBC). The propylene-based polymer makes up the majority of the weight of the second outer layer, and provides the heat resistance and other properties to the second outer layer. The OBC makes up a minority of the weight of the second outer layer, and enhances resistance to ink abrasion.

The second outer layer can contain the propylene-based copolymer in an amount of from 75 to 95 wt % (or from 75 to 90 wt %, or from 75 to 85 wt %) based on layer weight, and the OBC in an amount of from 5 to 25 wt % (or 10 to 25 wt %, or 10 to 20 wt %, or 15 to 25 wt %) based on layer weight, alone or optionally further in combination with a polysiloxane (particularly polydimethylsiloxane) in an amount of from 5 to 20 wt % (or 10 to 20 wt %, or 12 to 18 wt %, based on layer weight). Similarly, the second outer layer can contain a two-component blend of a propylene/ethylene copolymer, and/or a propylene-ethylene/butene terpolymer, in an amount of from 75 to 95 wt % (or from 75 to 90 wt %, or from 75 to 85 wt %) based on layer weight, with the OBC in an amount of from 5 to 25 wt % (or 10 to 25 wt %, or 10 to 20 wt %, or 15 to 25 wt %) based on layer weight, alone or optionally further in combination with a polysiloxane (particularly polydimethylsiloxane) in an amount of from 5 to 20 wt % (or 10 to 20 wt %, or 12 to 18 wt %, based on layer weight).

Propylene-based polymers have a propylene mer % of at least 50.1. Propylene-based polymers include propylene/ethylene copolymer (PEC), propylene/ethylene/butene terpolymer (PEB), and propylene homopolymer (PP). Propylene homopolymer has a density of at least 0.890 g/cm³, or at least 0.895 g/cm³ , and has a melt flow index of from 0.5 to 15 g/10min (at 230°C and 2.16 kg), or from 1 to 10 g/10 min, or from 2.5 to 7.0 g/10 min.

Propylene copolymer, including random copolymers of propylene with ethylene and propylene/ethylene/butene terpolymer, have an ethylene mer content of up to 15 mol %, or up to 10 mol %, and have a density of at least 0.890 g/cm³, or at least 0.895 g/cm³ , and have a melt flow index of from 0.5 to 15 g/10min (at 230°C and 2,16 kg), or from 1.0 to 10 gr/10 min, or from 2.5 to 7.0 gr/10 min. Random terpolymers of propylene with ethylene and butene contain a combined ethylene and butene mer content of up to 18 mol %, or up to 14 mol %, and have a butene/ethylene mol ratio of at least 2, or at least 4, and have a density of at least 0.890 g/cm³, or at least 0.895 g/cm³ , and a melt flow index of from 0.5 to 15 gr/10min (at 230°C and 2,16 kg), or from 1.0 to 10 gr/10 min, or from 2.5 to 7.0 gr/10 min. The propylene-based polymer can be Eltex® PKS 607 random terpolymer from Solvay, Eltex® PKS359 or PKS350 propylene-based random terpolymer from Ineos, and Moplen® HP515M propylene homopolymer containing slip and anti-blocking agents, from Lyondell Basell.

The OBC in the second outer layer can be an ethylene/octene copolymer having a density of from 0.85 to 0.89 g/cc, or 0.870 to 0.884 g/cc, or 0.875 to 0.879 g/cc, or 0.876 to 0.878 g/cc. The OBC can have a melt index of from 0.5 to 10 g/10 min, or 0.8 to 7 g/10 min, or 0.9 to 6 g/10 min, or from 1 to 5 g/10 min, or from 0.9 to 1.1 g/10 min, or from 4.8 to 5.2 g/10 min. The hard segments in the OBC can make up from 10 to 40 wt % based on total OBC weight, or from 5 to 40 wt %, or from 15 to 30 wt %, or from 23 to 27 wt %. The hard segments can have a comonomer content of less than 3 mole percent, or less than 2 mol %, or less than 1 mol %, or less than 0.9 mol %. The soft segments can have a comonomer content of from 14 to 28 mol %, or from 15 to 20 mol %, or from 17 to 19 mol %. The OBC can be an ethylene/C₃₋₂₀ α-olefin, or an ethylene/C₄₋₁₂ α-olefin copolymer having a density of from 0.870 to 0.884 g/cm³ and a melt index of from 0.8 g/10 min to 7 g/10 min, or an ethylene/ C₆₋₈ copolymer having a density of from 0.875 to 0.879 g/cm³ and a melt index of from 0.9 g/10 min to 6 g/10 min, or an ethylene/C₈ copolymer having a density of from 0.876 to 0.878 g/cm³ and a melt index of about 4.8 to 5.2 g/10 min, or an ethylene/C₈ copolymer having a density of from 0.876 to 0.878 g/cm³ and a melt index of about 0.9 to 1.1 g/10 min. The OBC can have an M_{w}/Mₙ of at least 1.7, or an M_{w}/Mₙ of from 1.7 to 3.5.

The multilayer film can optionally further comprise an internal gas barrier layer which serves as an oxygen (O₂) barrier layer. Oxygen barrier polymers include vinylidene chloride copolymer (PVdC), ethylene-vinyl alcohol copolymer (EVOH), polyamide, polyacrylonitrile, and blends thereof. The thickness of the oxygen barrier layer is determined by the barrier character of the selected barrier polymer, in order to achieve a desired oxygen transmission rate (OTR). High barrier films have an OTR (evaluated at 23°C and 0 % relative humidity, per ASTM D-3985) below 100 cm³/m² 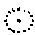 day 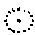 atm and preferably below 80 cm³/m² 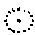 day 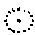 atm and will be particularly suitable for meat packaging, including fresh red meat and processed meat. Higher OTR for low barrier films will be preferred for packaging, e.g., cheese is generally best packaged in a package having an OTR of from about 100 to about 500 cm³/m² 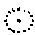 day 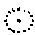 atm, or from about 150 to about 450 cm³/m² 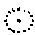 day 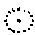 atm are mostly preferred. The barrier layer can have a thickness of from 0.1 to 30 µm, or 0.1 to 20 µm, or 0.5 to 10 µm, or from 1 to 7 µm. Many barrier layers do not readily adhere to polyethylene and polypropylene, and require the presence of one or more tie layers to provide a desired level of interlayer adhesion.

The term "PVdC" includes polyvinylidene chloride as well as copolymers of vinylidene chloride and at least one mono-ethylenically unsaturated monomer copolymerizable with vinylidene chloride. The mono-ethylenically unsaturated monomer may be present from 2 to 40 wt %, or 4 to 35 wt %, of the resultant PVdC. Examples of the mono-ethylenically unsaturated monomer include vinyl chloride, vinyl acetate, vinyl propionate, alkyl acrylates, alkyl methacrylates, acrylic acid, methacrylic acid, and acrylonitrile. PVdC also includes copolymers and terpolymers such as polymers of vinyl chloride with one or more C₁₋₈ alkyl acrylates or methacrylates, such as methyl acrylate, ethyl acrylate or methyl methacrylate, as the comonomers. Furthermore, two different PVdC polymers can be blended, a PVdC-VC copolymer can be blended with a PVdC-MA copolymer. Blends of PVdC and polycaprolactone (e.g., examples 1-7 of European patent number 2,064,056 B1) are suited for the packaging of respiring food products, such as cheese. The PVdC may contain suitable additives as known in the art, i.e., stabilizers, antioxidants, plasticizers, hydrochloric acid scavengers, etc. that may be added for processing reasons or/and to control the gas-barrier properties of the resin. Suitable PVdC polymers include Ixan® PV910 polyvinylidene chloride from Solvin and Saran® 806 polyvinylidene chloride from The Dow Chemical Company.

EVOH copolymer is a suitable oxygen barrier polymer for use in fully coextruded, irradiated films, as EVOH withstands relatively high levels of irradiation without degradation. EVOH can be used alone or admixed with one or more polyamides and/or copolyamides.

Polyamides and copolyamides can also be employed as oxygen barrier polymers. Exemplary polyamides for use in oxygen barrier layers include polyamide MXD6, polyamide 6T, polyamide 6I, copolyamide 6I/6T, and polyamide MXD6/MXDI. Suitable commercial resins include Ultramid® C33 L01 copolyamide 6/66, from BASF, Terpalex® 6434B special terpolymer composed of PA6, PA66, and PA12 made by ternary copolymerization, from UBE Industries, Ltd, UBE® 5033 and UBE® 5034 polyamide 6/66 copolymer from UBE Engineering Plastics SA, and Grilon® FE7642 polyamide or Grilon® FE7624 polyamide, from EMS Chemie AG. Amorphous polyamides and semi-crystalline polyamides provide higher oxygen barrier than crystalline polyamides.

Alternatively, the multilayer film may be devoid of a gas barrier layer are also contemplated. OTR of at least 1000 cm³/m² 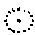 day 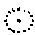 atm, preferably in the range from 1000 to 10000 cm³/m² 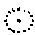 day 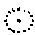 atm can be used in the packaging of various products, including frozen products.

One or more layers of the multilayer film may optionally contain one or more additives, such as slip and anti- block agents, e.g., talc, wax, silica, antioxidants, stabilizers, plasticizers, fillers, pigments and dyes, cross-linking inhibitors, cross-linking enhancers, UV absorbers, odor absorbers, oxygen scavengers, antistatic agents, anti-fog agents or compositions, and the like additives known to those skilled in the art of packaging films.

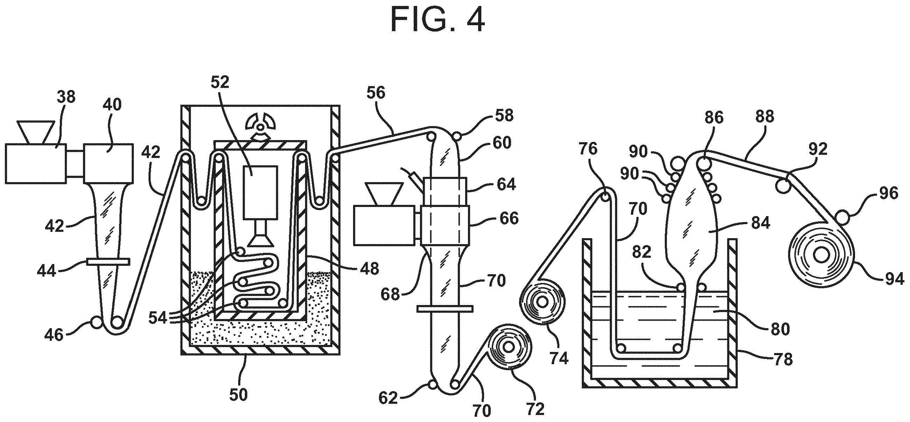

The multilayer heat-shrinkable film can be manufactured by co-extrusion or extrusion coating, using either a flat or a circular film die that allows shaping the polymer melt into a flat film or a film tubing. The multilayer film of the invention can be made using a trapped-bubble process known for the manufacture of heat-shrinkable films for food packaging, described below and illustrated in FIG. 4. Typical solid state orientation ratios for the films of the present invention can be from 2X to 6X in each direction (MD and TD), or from 3X to 5X in each direction, or from 3.5X to 4.5X in each direction. Alternatively, the multilayer film according to the present invention may be obtained by flat coextrusion through a slot die, followed by heating to its softening temperature (but below its melt temperature) and stretching in the solid state by a simultaneous or a sequential tenterframe process.

Optionally, during the manufacture of the multilayer film, the extrudate may be cross-linked, either chemically or by irradiation. The extrudate can be subjected to a radiation dosage of high energy electrons, preferably using an electron accelerator, with the dosage level being determined by standard dosimetry methods. Depending on the characteristics desired, this irradiation dosage can be from 20 to 200 kiloGrays (kGy), or from 30 to 150 kGy, or from 60 to 70 kGy.

Although accelerators such as a Van der Graaf generator or resonating transformer may be used to generate the radiation, any ionizing radiation may be used. Depending on the number of layers to be present in the film, it may be desirable to split the extrusion by first extruding a substrate which is irradiated and thereafter extrusion-coating the irradiated substrate, followed by solid-state orientation of the irradiated, coated extrudate.

If extrusion-coating is employed, all of the coating layers can be applied as a single, simultaneous extrusion coating of the quenched substrate, or the coating step can be repeated as many times as the layers to be coated onto the quenched substrate. The extrusion-coating step is desirable when making a film which is only partially crosslinked. In a multilayer barrier film comprising PVdC, it is desirable to avoid degradation and/or discoloration of the PVdC layer by avoiding subjecting the PVdC to irradiation. This is accomplished by performing irradiation after extrusion of substrate layers which do not include the layer comprising the PVdC, with the PVdC layer being added by extrusion coating after the irradiation of the substrate.

As described above, the multilayer film of the invention can be produced as a seamless tubing or as a flat film. A seamless tubing can be converted to packaging articles such as end-seal bags, side-seal bags, casings, etc while retaining the seamless tubing. Alternatively the seamless tubing can be converted to a flat film by slitting before or after the tubing is wound onto rolls for further processing. The heat sealing of the first outer film layer to itself or another component of a packaging article can be accomplished in a fin seal mode (a first region of the heat seal layer heat sealed to a second region of the heat seal layer), or a lap seal mode (region of the heat seal layer heat sealed to a region of the second outer layer).

In an embodiment, a flexible lay-flat, V-shaped side seal bag is made from a seamless tubing, with the side-seal bag having an open top, a folded bottom edge, and first and second side seals. The side seal bag can be provided as a triangular bag by angling the side seals with respect to the open top, or can be partially angled to produce a trapezium-shaped bag, or can be perpendicular to the open top to produce a square or rectangular side-seal bag.

In an embodiment, the flexible packaging article is a lay-flat pouch made by heat sealing two flat films to one another, the pouch having an open top, a first side seal, a second side seal and a bottom seal.

The packaging article can optionally comprise at least one tear initiator.

The multilayer film of the present invention can be supplied in rolls and converted to pouches on a conventional horizontal packaging machine such as for example Flow-Vac® Flow Wrapper (HFFS) supplied by Ulma. In this process, a product is packaged in a pouch which is shrunk around the product, with the pouch having three-seals: two transverse heat seals and one longitudinal heat seal which is a backseam heat seal.

Pouches can also be formed using a Vertical Form Fill Seal (VFFS) packaging system. VFFS process is known to those skilled in the art and is described in, for example, USPN 4,589,247. In a VFFS process, a product is introduced through a central, vertical fill tube to a continuously supplied flat film having a terminal region formed into a backseamed tubing by heat sealing longitudinally with a fin or lap seal, followed by heat sealing transversely across the end of the tubing form a package bottom. The product is directed downwardly into the resulting pouch, which is thereafter closed by making a transverse heat seal across the backseamed tubing at a location above the product inside the pouch, followed by severing the pouch from the tubular film above.

In both VFFS and HFFS, the transverse sealer may be provided with means to simultaneously seal the top of the leading pouch and the bottom of the following pouch, as well as to sever the two seals from one another, in order to separate the leading package from the front sealed tubing. Alternatively, in the VFFS and HFFS processes, the transverse seal may be operated to sever the leading package from the following tubular portion while transversely sealing only the leading end of the following tubular portion, thus creating the sealed bottom of the next leading pouch. In this way each pouch containing product has only a longitudinal seal and a transverse seal. It can then be forwarded to a vacuum chamber and vacuumized before the second transverse seal is made to close the package. In this arrangement, the solid-state oriented heat-shrinkable thermoplastic film of the present invention is employed as the packaging material, and the vacuumized package is then shrunk to achieve the desired packaged product. In both VFFS and HFFS processes, the transverse seals are always fin seals, but the longitudinal seal can be either a fin seal or a lap seal.

The multilayer film of the present invention can be used to make a heat-shrinkable bag which is used to package a product. The product is loaded into the heat-shrinkable bag, with atmosphere thereafter being evacuated from the bag, with the open end of the bag then being by heat-sealing or by applying a clip, e.g. of metal. This process is advantageously carried out within a vacuum chamber where the evacuation and application of the clip or heat seal is done automatically. After the bag is removed from the chamber it is heat shrunk by applying heat. Shrinking of the film can be carried out by immersing the filled bag into a hot water bath or conveying it through a hot water shower or a hot air tunnel, or by infrared radiation. The heat treatment can produce a tight wrapping that will closely conform to the contour of the product.

The multilayer film of the invention can be used in a wide variety of packaging applications, including food packaging. Among other food products, the multilayer film can be used in the packaging of meat, poultry, cheese, processed and smoked meat, pork and lamb. A heat-shrinkable film of the invention can provide complete shrinkage of the bag around the product, so that the bag is not wrinkled, thus offering an attractive package. The bag can be provided with mechanical properties that allow it to physically survive the process of being filled, evacuated, sealed, closed, heat shrunk, boxed, shipped, unloaded, and stored at the retail supermarket, as well as a stiffness level advantageous for loading the product into the packaging article made from the film.

The film can be printed with a solvent-based ink that cures by evaporation of a solvent rather than by chemical reaction. Alternatively, the ink can be a reactive ink system which is radiation-curable or thermosetting. One or more layers of ink can be printed onto the film. The ink is preferably applied to the non-food side of the film in order to avoid contact of the packaged food with the ink. In the multilayer film, the ink is preferably applied to the external layer, i.e., outer layer, of the film.

An overprint varnish can be applied over the ink. The cured overprint varnish can be transparent. The overprint varnish can cover a substantial portion of the printed image. The overprint varnish can have a viscosity such that it can be printed or applied in a similar manner as solvent-based inks. The overprint varnish can be a cured reactive overprint varnish (i.e., pigment-free overcoat) covering the printed image. Reactive overprint varnishes include radiation-curable varnish systems and thermoset varnish systems. Reactive overprint varnishes may be applied over a printed image comprising a cured reactive ink system. Printing film with one or more inks followed by application of overprint varnish is disclosed in EP 1317348B1, hereby incorporated, in its entirety, by reference thereto.

The multilayer film of the invention can have printing on the outside surface of the second outer layer. Methods for printing the films of the present invention include any conventional method of printing of plastic materials well known in the art. Inks that can be used in the printing process include nitrocellulose/polyurethane ink, as well as other types of ink based on polyvinyl butyral (PVB), polyamide and polyurethane when converting or using processes involving temperatures higher than 95-100°C, i.e., sterilization.

### The Ink Abrasion Test

Ink can be abraded from a printed packaging film during product shipment, product storage, product handling, and product end use. Various films of Examples 1-18 were tested for ink abrasion resistance using a test method designed to evaluate the ink abrasion resistance of a printed film in wet and dry conditions. The ink abrasion tester was a motor driven device for moving a weighted test strip over a printed test specimen through an arc of two and one quarter inches (5.71 cm) for a predetermined number of cycles under a specified load.

The equipment used for the ink abrasion test included a Sutherland Rub Tester, a four-pound (1.82 kg) weight (for simulating more severe shipping and handling conditions), and an ASTM Standard Receptor. The receptor is a film or paper of a specified abrasiveness onto which inks removed from the specimen are deposited during the abrasion test. The receptor used in the testing of the examples below was 3M Al oxide lapping film, Green 30 micron, manufactured by 3M, manufacturer part number 261 x 30 MIC 215 x 280, RS Stock No. 459-323. A pressure-sensitive tape was also used.

In the samples to tested, the printed substrate to be tested was cut to a specified size, with the printed area selected representing average ink lay and coverage for the printed portion of the film. In the test results reported in the examples set forth below, each sample was cut to a length of 6 inches (15.24 cm) and a width of 3 inches (7.62 cm). The machine direction of the sample ran parallel to the sample width. In the test, rubbing of the sample was carried out across the machine direction, i.e., in the transverse direction. The four pound weight was used. The sample was a flat sample having no scoring, no ridges, and no surface irregularities. In the testing of multiple samples, effort was made to ensure that each sample of a given set had comparable, if not identical, ink coverage and ink density.

The ink abrasion testing was performed at a constant temperature, i.e., in a room at 23°C ±1°C and 50% ±2% relative humidity. The test procedure was as follows: (I) the receptor was mounted to the rubber pad of the receptor block, using pressure sensitive tape; (II) the test specimen was attached to the rubber pad on the Sutherland base with the test surface exposed; (III) the receptor block was placed in the receptor block holder; (IV) the dial of the Sutherland Rub tester was preset to the desired number of rubbing cycles (20 cycles); (V) the Sutherland Rub Tester was turned on and testing was carried out for the preset number of cycles, after which the Sutherland Rub Tester automatically shut off. Steps I-V were repeated for each specimen. Three specimens were tested for each sample, and the results averaged.

The following test conditions were recorded for each sample tested: receptor type, load in pounds (or kg), and number of cycles. Upon completion of testing, each sample was examined for degree of degradation, i.e., for the observed degree of ink loss due to abrasion. Each sample was evaluated and placed into one of the following ink abrasion classifications: "5" = excellent (no ink removal); "4" = good (10-20% ink removal); "3" = bad (30-40% ink removal); "2" = poor (50-60% ink removal); "1" = very poor (>60% ink removal). Data recorded for each sample included the abrasion classification as well as the test conditions (receptor type, load, number of cycles).

### The Ink Adhesion Test

The degree to which ink was adhered to the film was assessed by pressing the adhesive side of a tape to the printed surface of a sample, followed by pulling the tape off of the printed film and examining the print remaining on the sample to determine how much ink was removed from the sample by the tape. The equipment used in the ink adhesion test included (i) a sample of the printed film, the sample having a width of at least 50 mm and a length of at least 150 mm; (ii) clear, standard, pressure-sensitive cellophane tape having a width of 25 mm (e.g., TESA 4204 tape having a width of 25 mm); and (iii) pressure-sensitive cellophane tape having a width of 50 mm.

The procedure used in the Ink Adhesion Test was as follows: (1) the printed surface of the sample to be tested was placed printed side down on a clean, flat surface; (2) a piece of the 50 mm wide pressure sensitive tape having a length of at least 180 mm was applied to the back side of the printed film sample, i.e., on the unprinted surface of the sample in a location on the back of the printed area; (3) the 50 mm wide tape was pressed down firmly to eliminate any air bubbles or wrinkles; (4) the sample was then turned over so that the printed surface faced upward, and a strip of the 25 mm wide tape was applied to this surface along the area corresponding to the middle of the 50 mm tape strip adhered to the reverse side of the sample; the strip of 25 mm wide tape was long enough to cover a 150 mm long portion of the sample, with a the 25 mm wide tape having a length of at least 25 mm remaining unattached to the sample; the unattached portion of the 25 mm tape was folded back on itself to form a tab; (5) the 25 mm wide tape was pressed firmly into contact with the printed surface of the sample to eliminate any air bubbles or wrinkles; (6) while holding the film surrounding the taped area firmly on the flat surface, using the tab the 25 mm wide tape was removed from the sample by pulling back in a horizontal direction with a smooth, easy motion.

The sample was then inspected to determine the amount of ink removed by the tape. The ink adhesion rating of each sample was made visually by estimating the percent of ink remaining in the area of the sample from which the tape was pulled. Ink removal flake-off) was rated from 0 to 10, as follows: "very good" = no ink was removed from the test area of the sample, i.e., 100% of the ink remained on the sample in the test area; "good"= at least 80% of the ink remained on the sample in the test area; "acceptable"= from 60% to about 80% of the ink remained on the sample in the test area, "poor" = if less than 60% of the ink remained on the sample in the test area, "very poor" = if less than 40% of the ink remained on the sample in the test area.

The processor typically applies a printed image (e.g., printed information) using conventional techniques such as by ink printing. Accordingly, the surface of the film to be printed will be compatible with selected print ink systems. To form the printed image, one or more layers of ink are printed on the film. The ink is selected to have acceptable ink adhesion, gloss, and heat resistance once printed on the film. Acceptable ink adhesion includes at least 50%, or at least 60%, or at least 70% as measured by ASTM D3359-93, as adapted by those of skill in the film printing art.

The printed image preferably comprises a water based ink or a solvent based ink, more preferably a solvent based ink. A solvent-based ink is an ink that cures by evaporation of a solvent rather than by a chemical reaction (as with reactive inks discussed below). Solvent-based inks for use in printing packaging films include a colorant (e.g., pigment) dispersed in a vehicle that typically incorporates a resin (e.g., nitrocellulose, polyamide), a solvent (e.g., an alcohol), and optional additives. Inks and processes for printing on plastic films are known to those of skill in the art. See, for example, Leach & Pierce, The Printing Ink Manual, 5th ed., Kluwer Academic Publishers, 1993) and USPN 5,407,708.

Examples of solvent-based ink resins include those which have nitrocellulose, amide, urethane, epoxide, acrylate, and/or ester functionalities. Ink resins include one or more of nitrocellulose, polyamide, polyurethane, ethyl cellulose, (meth) acrylates, poly(vinyl acetate), poly(vinyl chloride), and polyethylene terephthalate (PET). Ink resins may be blended, for example, as nitrocellulose/polyamide blends (NC/PA) or nicrocellulose/polyurethane blends (NC/PU).

Examples of ink solvents include one or more of water solvent or hydrocarbon solvent, such as alcohols (e.g., ethanol, 1-propanol, isopropanol), acetates (e.g., n-propyl acetate), aliphatic hydrocarbons, aromatic hydrocarbons (e.g., toluene), and ketones. The solvent may be incorporated in an amount sufficient to provide inks having viscosities suitable for the intended use, as known to the skilled person.

The printed image may comprise a reactive ink system. Reactive ink systems include radiation-curable ink systems and thermoset ink systems. The cured ink derived from the reactive ink system may form at least a portion of the surface of the printed image.

A radiation-curable ink system may incorporate one or more colorants (e.g., pigments) with the monomers and oligomer/prepolymers as disclosed for example in "Radiation-curable Inks and Varnish Systems," The Printing Ink Manual, Chapter 11, pp. 636-677 (5th ed., Kluwer Academic Publishers, 1993). Useful oligomers/prepolymers include resins having acrylate functionality, such as epoxy acrylates, polyurethane acrylates, and polyester acrylates, with epoxy acrylates preferred. Exemplary oligomers and prepolymers include (meth)acrylated epoxies, (meth)acrylated polyesters, (meth)acrylated urethanes/polyuretyhanes, (meth)acrylated polyethers, (meth)acrylated polybutadiene, aromatic acid (meth)acrylates, (meth)acrylated acrylic oligomers, and the like.

Application and curing of a radiation-curable ink is conventional. Preferably each of the inks used to make the printed markings on the film surface is essentially free of photoinitiators, thus eliminating the possibility that such materials may migrate toward and into the product to be packaged.

A thermoset ink system may include one or more colorants (e.g., pigments) dispersed with the reactive components of a thermoset varnish system. Thermoset varnish systems are applied and cured conventionally. The printed film is preferably transparent (at least in the non-printed regions) so that the packaged item is visible through the film.

The film may be printed by any suitable method, such as rotary screen, gravure, or flexographic techniques, as is known in the art, preferably by flexographic technique. The printed image is applied to the film by printing the ink on the external side of the tubing. If a solvent-based ink (i.e., a non-chemically reactive ink) is applied to the tubing, the solvent evaporates, leaving behind the resin-pigment combination. The solvent may evaporate as a result of heat or forced air exposure to speed drying. The ink may be applied in layers, each with a different color, to provide the desired effect. For example, a printing system may employ eight print stations, each station with a different color ink.

If a radiation-curable ink or varnish is used, then after application of the pre-reacted ink or varnish to the film, the film is exposed to radiation sufficient to cure the ink or varnish. This polymerizes and/or crosslinks the reactants in the ink or varnish. Preferably UV-light radiation may be used if the radiation-curable ink or varnish is formulated with photoinitiators. An electron beam is a possible alternative form of radiation.

If a thermoset ink is used, then before application the components of the thermoset system are mixed together, typically incorporating a suitable solvent or dispersant. The mixture is then applied using the techniques as discussed above. After application, the thermoset ink is exposed to conditions appropriate to cure (i.e., polymerize and/or crosslink) the system's reactive components. Curing may be effected by elevated temperature conditions. The solvent may also be evaporated at this point.

FIG. 1 is a cross-sectional schematic view of two-layer film 10 of the present invention. First outer layer 12 serves as a heat seal layer and inside food-contact layer. Second layer 14 is the second outer layer and serves as an outside layer having printing thereon, and comprises the blend of the invention, i.e., a blend of a propylene-based polymer and an olefin block copolymer.

FIG. 2 is a cross-sectional schematic view of a three-layer film 16 of the present invention. First outer layer 18 serves as a heat seal layer and inside food-contact layer. Second layer 20 is an inner and comprises a three-component blend that provides the film with one or more benefits as discussed below. Third layer 22 is the second outer layer which serves as an outside layer of the package and has print thereon, and which comprises the blend of propylene-based polymer and the olefin block copolymer which enhances the ink abrasion resistance of the film.

It has been discovered that providing the film with an inner layer containing a three-component blend can result in one or more of: (i) decreases percentage of leakers due to accidental opening or rupture of the package during the packaging process or subsequent handling and transport, and (ii) improved machinability in order to decrease the rejects and increase the speed of the packaging cycles, (iii) increased abuse-resistance and tear-resistance of the film, and, (iv) improved process stability and improved processability via easier bubble inflation and high resistance to drawing without negatively affecting optical properties and improved bubble stability and decreased occurrence of "bubble burst" during solid-state bubble orientation, by providing the film with greater mechanical strength during solid state orientation using a trapped bubble, resulting in improved product yield. The three-component blend can be used to provide the film with good mechanical properties, while retaining a high total free shrink and good optical properties. The film of the present invention exhibits good processability in terms of bubble stability and ability to withstand high orientation ratio.

Good "machinability" is present in a film that can be used with a packaging machine without undue creasing, folding, seal pleats, edge curls, or jamming. Machinability defects are more evident with films of lower thickness, which are becoming more common in the trend towards sustainability. This three component blend improves machinability in part due to increasing the stiffness of the film, without reducing the free shrink or optics (e.g., gloss, haze) of the film.

In a first embodiment, the three component blend contains (i) from 10 to 60 wt % (based on blend weight) of a polymer A selected from the group consisting of: ethylene/unsaturated ester copolymer, ethylene/unsaturated acid copolymer and ionomer resin, (ii) from 5 to 50 weight % (based on blend weight), of at least a polymer B selected among ethylene/α-olefin copolymer having a density of 0.868 to 0.910 g/cm³ (or 0.868 to 0.905 g/cm³), and (iii) from 30 to 65 wt % (based on blend weight) of a polymer C which is an ethylene/α-olefin copolymer having a density of 0.912 to 0.935 g/cm³ wherein polymer C has a bimodal molecular weight distribution or has long chain branching. In a second embodiment, polymer A is present in an amount of from 20 to 55 wt %, and polymer B is present in an amount of 7 to 40 wt %, and polymer C is present in an amount of from 35 to 60 wt %. In a third embodiment, Polymer A is present in an amount of from about 30 to 50 wt %, polymer B is present in an amount of from 10 to 30 wt %, and polymer C is present in an amount of from 40 to 50 wt %

The A polymer can be Nucrel® ethylene/methacrylic acid copolymer, or Elvaloy® ethylene copolymer from DuPont (e.g., Nucrel® 1202 HC), or Lotader® ethylene acrylate terpolymer or Lotril® ethylene copolymer from Arkema, or Primacor® ethylene acrylic acid copolymer from Dow.

The B polymer can be Affinity® homogeneous ethylene/α-olefin copolymer having long chain branching, from Dow (e.g., Affinity® 1880G ethylene/octene copolymer), Attane® very low density heterogeneous ethylene/α-olefin copolymer from Dow, Evolue® SP0510 ethylene/α-olefin copolymer from Prime Polymer Co Ltd, Evolue® SP0540 ethylene/α-olefin from Prime Polymer Co LTD, or Exact® homogeneous ethylene/α-olefin copolymer from ExxonMobil. The B polymer can have a melt index of from 0.5 to 5 g/10 min, or 1.0 to 3.0 g/10 min, measured according to ASTM D 1238 at 190°C and 2.16 Kg.

The C polymer can be Dowlex® homogeneous ethylene/α-olefin copolymer from Dow (e.g., Dowlex® XZ 89446 and Dowlex® 5057G), or Enable® homogeneous ethylene/α-olefin copolymer from ExxonMobil, or Evolue® SP2020 linear low density polyethylene and Evolue® SP2320 linear low density polyethylene from Prime Polymer Co Ltd. The C polymer can be an ethylene/α-olefin copolymer having a density from 0.912 to 0.935 g/cm³, or from 0.912 to 0.925 g/cm³. The C polymer can have a melt flow index (measured according to ASTM D1238 at 190°C and 2.16 kg) of from 0.5 to 5 g/10 min, or from 1.0 to 3.0 g/10min. If the C polymer is a long-chain branched polymer, the l₁₀/l₂ ratio (ratio of melt flows at 10 kg and 2.16 kg) is at least 6, or at least 7, or from 8.0 to 16.

Both the B and C polymers can have a melt flow index of from 0.5 to 5 g/10 min, more preferably from 1.0 to 3.0 g/10min. More than one A polymer, more than one B polymer, and/or more than one C polymer can be provided in the three-component blend. Moreover, additional polymers that are not A, B, or C polymers can be incorporated into the three-component blend.

The three component blend in can be prepared by feeding proportional amounts of polymers A, B and C into one or more extruders used for the production of the multilayer films. Alternatively, the three component polymer blend of the present invention can be prepared using conventional extrusion compounding systems by feeding the proportional amounts of polymers A, B and C into a compounding extruder in which the polymers are melted. The resulting melt can then be conveyed to an extrusion die which defines the shape of the melt, which is then cooled using air or water and cut into pellets. The masterbatch so obtained can be subsequently used for the manufacturing of a multilayer film according to the invention by supplying the masterbatch to an extruder used in the production of the multilayer film.

The three component blend can be present in one or more inner film layer. The position of the inner layer(s) containing the three-component blend is not limited. The inner layer containing the three-component blend can be adjacent to the first outer heat seal layer, and/or adjacent the second outer layer. Alternatively, the inner layer containing the three-component blend can be adjacent to the gas barrier layer, with an adhesive layer (i.e., tie layer) provided to ensure adequate adherence of the inner layer containing the three-component blend to the barrier layer. In one embodiment, the inner layer containing the three-component blend is directly adhered top the first outer heat seal layer.

The film properties can be adjusted by changing the relative percentages of polymers A, B and C in the three component blend. The thickness of the inner layer containing the three-component blend can be, for example, 5 to 20 microns, or 7 to 15 microns, or 8 to 12 microns. Desirable film properties can be obtained by providing the film with the three-component blend in an amount of at least 5 wt %, based on total film weight, or at least 10 wt %, or at least 20 wt %. Desirable film properties can be obtained by providing the film with the three-component blend in an amount of less than 60 wt %, based on total film weight, or less than 50 wt %, or less than 40 wt %, or less than 30 wt %. The three-component blend can be present in the film in an amount of from 5 to 60 wt %, based on total film weight, or from 10 to 40 wt %, or from 20 to 35 wt %.

FIG. 3 is a cross-sectional schematic view of a six-layer film 24 of the present invention. First outer layer 26 serves as a heat seal layer and inside food-contact layer. Second layer 28 is an inner layer comprising the same three-component blend as inner layer 20 in the film of FIG. 2. Third layer 30 is a first tie layer between second layer 28 and the fourth layer 32 which is a oxygen barrier layer. Fifth layer 34 is a second tie layer between oxygen barrier layer 32 and sixth layer 36 which serves as the second outer layer 36 having print thereon and which comprises the blend of propylene-based polymer and the olefin block copolymer.

FIG. 4 is a schematic illustration of a process for producing film in accordance with the invention. In FIG. 4, solid polymer beads (not illustrated) are fed to one or more extruders 38 (for simplicity, only one extruder 38 is illustrated). Inside extruders 38, the polymer beads are forwarded, melted, and degassed, following which the resulting bubble-free melt is forwarded into die head 40, and extruded through an annular die, resulting in tubing tape 42 which is from about 15 to about 30 mils in total thickness.

After cooling or quenching by water spray from cooling ring 44, tubing tape 42 is collapsed by pinch rolls 46, and is thereafter fed through irradiation vault 48 surrounded by shielding 50, where tubing tape 42 is irradiated with high energy electrons (i.e., ionizing radiation) from iron core transformer accelerator 52. Tubing tape 42 is guided through irradiation vault 48 on rolls 54. Tubing tape 42 is irradiated to a level of about 64 kiloGrays.

After irradiation, irradiated tubing tape 56 is directed through pinch rolls 58, following which irradiated tubing tape 56 is slightly inflated, resulting in trapped bubble 60. However, at trapped bubble 60, tubing tape 56 is not significantly drawn longitudinally, as the surface speed of nip rolls 62 is about the same speed as the surface speed of nip rolls 58. Furthermore, irradiated tubing tape 56 is inflated only enough to provide a substantially circular tubing without significant transverse orientation, i.e., without stretching.

Slightly inflated, irradiated tubing tape at trapped bubble 60 is passed through vacuum chamber 64, and is thereafter forwarded through coating die 66, in a process referred to as "extrusion coating". Second tubular extrudate 68 is melt extruded from coating die 66 and coated onto slightly inflated, irradiated tubing tape 56, to form coated tubular tape 70. Second tubular extrudate 68 includes the O₂ barrier layer, which has not been subjected to ionizing radiation. Extrusion coating is particularly desirable when the film is to contain an oxygen barrier layer containing polyvinylidene chloride, vinlyidene chloride/methyl acrylate copolymer, and/or vinylidene chloride/vinyl chloride copolymer, as these barrier layers are known to degrade upon exposure to irradiation as described above. Further details of the above-described coating step are set forth in U.S. Patent No. 4,278,738, to BRAX et. al., which is hereby incorporated by reference thereto, in its entirety.

After irradiation and coating, coated tubular tape 70 is wound up onto windup roll 72. Thereafter, windup roll 72 is removed and installed as unwind roll 74, on a second stage in the process of making the multilayer heat-shrinkable film. Coated tubular tape 70, from unwind roll 74, is unwound and passed over guide roll 76, after which coated tubular tape 70 is passed into hot water bath tank 78 containing hot water 80. The now collapsed, irradiated, coated tubular tape 70 is submersed in hot water 80 (having a temperature of 91 °C to 93°C) for a retention time of at least about 30 seconds, i.e., to bring the film up to the desired temperature for biaxial, solid state orientation. Thereafter, coated tubular tape 70 is directed through nip rollers 82 and 86, with a trapped bubble of air inside the annular film between pairs of rollers 82 and 86. Trapped bubble 84 transversely stretches coated tubular tape 70. Furthermore, while being transversely stretched, nip rollers 86 draw tubular film 70 in the longitudinal direction, as nip rollers 86 have a surface speed higher than the surface speed of nip rollers 82. As a result of the transverse stretching and longitudinal drawing, an irradiated, coated biaxially-oriented multilayer tubing film 88 is produced. In one embodiment, the coated tubular tape can be stretched in the transverse direction (TD) at a ratio of about 4:1 and drawn in the machine direction (MD) at a ratio of from about 3.9:1, for a total orientation ratio of about 15.6:1. While trapped bubble 84 is maintained between roller pairs 82 and 86, the upper portion of bubble 84 is collapsed by rollers 90, with the biaxially oriented, heat-shrinkable multilayer film 88 thereafter being conveyed through pinch rollers 86 and across guide roller 92, and then rolled onto wind-up roll 94. Idler roll 96 assures a good wind-up.

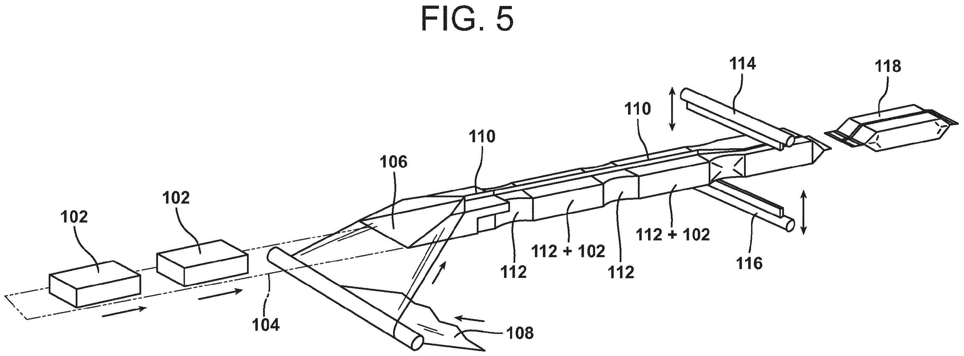

FIG. 5 is a schematic of a horizontal form fill seal packaging process employing a film in accordance with the present invention, to make a pillow pack. Although product 102 can be any product to be packaged, a preferred product is a meat product, such as a roast, steak, chops, ribs, etc. Each product 102 can be an individual piece of meat or a set comprising a plurality of pieces of meat.

Product 102 to be packaged is forwarded on conveyor 104, with a pusher (not shown) pushing product 102 into and through forming horn 106. Continuous strand of film 108 (supplied from a roll of film, not illustrated) is forwarded to, under, around, over, and past forming horn 106 as a stream of products 102 passes through forming horn 106. Products 102 are forwarded through forming horn 106 at the same speed that film 108 passes around and past forming horn 106.

Film 108 is folded as it passes around and over forming horn 106, so that as product 102 emerges from forming horn 106, film 108 is folded around product 102, with product 102 now being inside a tube 112 of film 108. Above forming shoe 106, the edges of film 108 are folded upward and a sealing apparatus (not illustrated) forms a continuous fin-type heat seal 110 along the upwardly folded longitudinal edges of film 108, as products 102 continue to be forwarded (on a conveyor, not illustrated) while inside the tubing 112 which has been formed from film 108.

The stream of products 102 and film tubing 112 are together forwarded to a transverse sealer and cutter including upper sealer/cutter member 114 and lower sealer/cutter member 116, which work together to make transverse seals between products 102, and to cut film tubing 112 apart to produce individual, closed, packaged products 118 after each package has been sealed closed. Upper and lower sealer/cutter bars 114, 116 oscillate upward and downward as film tubing 112 is forwarded. Upon being sealed closed and cut free of the film tubing, the result is packaged product 118. The heat-shrinkable film portion of packaged product 118 is then shrunk tight against product 102 by passing packaged product 118 through a hot air tunnel (not illustrated) or through a hot water bath (not illustrated).

If it is desired that the atmosphere is evacuated from the packages, the form film seal process can be conducted in an evacuated chamber (not illustrated). Products 102 can be forwarded into an upstream end of antechamber which is periodically closed and atmosphere evacuated so that the products therein can thereafter enter the form fill seal process without atmosphere and be packaged while under vacuum, resulting in enhanced shelf life and a tighter package after shrinking. Vacuum packaging can also be achieved by leaving one end of the package open and placing the open package in a vacuum chamber to evacuate atmosphere from within the package and closing the package by making the third seal while the package remains under vacuum.

The blend of the invention is useful on multilayer films having an outer printed layer containing a propylene-based homopolymer or copolymer. The outer printed layer of such films can contain, for example, a propylene-ethylene copolymer or a propylene-ethylene-butene terpolymer.

The following multilayer film formulations can benefit from an outer printed layer containing an olefin block copolymer.
(I) (s) et-α-olefin copolymer / tie / O₂-barrier / tie / PEC + OBC (p)
(II) (s) et-α-olefin copolymer / tie / PVDC / tie / PEC + OBC (p)
(III) (s) et-α-olefin copolymer / tie / PVDC-MA / tie / PEC + OBC (p)
(IV) (s) et-α-olefin copolymer / tie / PVDC-VC / tie / PEC + OBC (p)
(V) (s) et-α-olefin copolymer / tie / EVOH / tie / PEC + OBC (p)
(VI) (s) et-α-olefin copolymer / tie / amorphous PA / tie / PEC + OBC (p)
(VII) (s) et-α-olefin copolymer / tie / amorphous PA + PA6-12 / tie / PEC + OBC (p)
(VIII) (s) ssc et-α-olefin copolymer / tie / O₂-barrier / tie / PEC + OBC (p)
(IX) (s) ssc et-α-olefin copolymer / LLDPE / tie / O₂-barrier / tie / PEB + OBC (p)
(X) (s) ssc et/C₆₋₈ / ssc et/C₆₋₈ / tie / O₂-barrier / tie / PEB + OBC (p)
(XI) (s) et-α-olefin copolymer / tie / O₂-barrier / tie / PEB + OBC (p)
(XII) (s) et-α-olefin copolymer / tie / PVDC / tie / PEB + OBC (p)
(XIII) (s) et-α-olefin copolymer / tie / PVDC-MA / tie / PEB + OBC (p)
(XIV) (s) et-α-olefin copolymer / tie / PVDC-VC / tie / PEB + OBC (p)
(XV) (s) et-α-olefin copolymer / tie / EVOH / tie / PEB + OBC (p)
(XVI) (s) et-α-olefin copolymer / tie / amorphous PA / tie / PEB + OBC (p)
(XVII) (s) et-α-olefin copolymer /tie /amorphous PA + PA6-12 / tie / PEB + OBC (p)
(XVIII) (s) ssc et-α-olefin copolymer / tie / O₂-barrier / tie / PEB + OBC (p)
(XIX) (s) ssc et-α-olefin copolymer / LLDPE / tie / O₂-barrier / tie / PEB + OBC (p)
(XX) (s) ssc et/C₆₋₈ / ssc et/C₆₋₈ / tie / O₂-barrier / tie / PEB + OBC (p)
(XXI) (s) ssc et/C₈ / ssc et/C₈ / tie / O₂-barrier / tie / PEB + OBC (p)
(XXII) (s) PE+EVA / EVA / PA / PA / PA / PP / PP (p) (nonshrink)
(XXIII) (s) LLDPE+EVA / VDC-MA / PP+PB+EVA (p) (heat shrinkable)
(XXIV) (s) PE or PP/tie/barrier (EVOH or nothing) /tie/PE//glue// PP or BOPP (p) (s) = seal layer; (p) = printed layer; ssc = single site catalyzed; et-α-olefin = et/α-olefin

In any of multilayer films I-XXIV above, a propylene homopolymer, propylene copolymer, propylene terpolymer and/ or other propylene-based polymer can be substituted for some or all of the PEC or PEB or PP or BOPP. The tie layer can comprise any tie layer polymer. Preferred tie layer polymers include anhydride-modified ethylene/vinyl acetate copolymer, anhydride-modified ethylene/methyl acrylate copolymer, and anhydride-modified ethylene/methacrylic acid copolymer. The olefin block copolymer (OBC) can be present in the outer layer that having print ("p") thereon in an amount of from 5 to 40 wt %, or 10 to 30 wt %, or 15 to 25 wt %, based on blend weight. The propylene/ethylene copolymer ("PEC") or the propylene/ethylene/butene terpolymer ("PEB") can make up the remainder of the blend.

### Examples

The present invention can be further understood by reference to the following examples that are merely illustrative and are not to be interpreted as a limitation to the scope of the present invention that is defined by the appended claims. The films of Examples 1 through 21 contained resins identified in Table 1, below.

**Table 1**

| Tradename / Supplier | Chemical Nature | Acronym | Properties & Parameters |
|---|---|---|---|
| Affinity® PL 1281G1 DOW | Polyethylene, Very Low Density Ethylene/Octene Copolymer-with limited long chain branching, Single Site Catalyzed | sscPE1 | Density: 0.900 g/cc Comonomer content 13 % Melt Flow Index 6 g/10 min (Cond. 190°C / 2.16 kg) Melting Point: 99 °C |
| Affinity® PL1845G DOW | Polyethylene, Very Low Density Ethylene/Octene Copolymer-with limited long chain branching, Single Site Catalyzed | sscPE2 | Density: 0.91 g/cm³ Melt Flow Index: 3.5g/10 min (Cond. 190°C / 2.16 kg) Melt point: 103°C |
| Exact® 1007 Borealis | Polyethylene, Very Low Density Ethylene/Octene Copolymer - Linear, Single Site Catalyzed | sscPE3 | Density: 0.910 g/cm³ Melt Flow Index: 6.6g/10 min (Cond. 190°C/2.16kg) Melt point: 103°C |
| QUEO 1007 Borealis | Polyethylene, Very Low Density Ethylene/Octene Copolymer - Linear, Single Site | sscPE4 | Density: 0.91 g/cm³ Melt Flow Index: 6.6g/10 min (Cond. 190°C / 2.16 kg) |
| Affinity® PL 1880G DOW | Polyethylene, Linear Low Density Ethylene/Octene Copolymer - Linear, Single Site | LLDPE1 | Density 0.902 g/cm³, Melt Flow Index: 1.1g/10min (Cond. 190°C / 2.16 kg), Melting point: 99°C |
| Dowlex® XZ 89446 DOW | Polyethylene, Linear Low Density Ethylene/Octene Copolymer - (linear, Ziegler/Natta) | LLDPE2 | Density 0.916g/cm³ Melt Flow Index 2 g/10 min (Cond. 190°C / 2.16 kg), Ratio l₁₀/l₂ = 8 |
| Dowlex® 2045S DOW | Polyethylene, Linear Low Density Ethylene/Octene Copolymer - (linear, Ziegler/Natta) | LLDPE3 | Density 0.920 g/cm³ Melt Flow Index 1 g/10 min (Cond. 190°C / 2.16 kg), Melting point: 124°C |
| ADMER NF518E Mitsui Chemical | Maleic Anhydride-Modified Polyethylene, Linear Low density | LLDPE-md | Density 0.91 g/cm³ Melt Flow Index 3.1 g/10 min (Cond. 190°C / 2.16 kg), Melting point: 118°C |
| Ixan® PV910, Solvin | Vinylidene Chloride/Methyl Acrylate Copolymer - Stabilized | PVDC-MA | Comonomer content 8.1 % Density 1.71 g/cm³ Viscosity Relative min 1.44; max 1.48, Solution Viscosity 1 46 mPA sec |
| Elvax® 3165 DuPont | Ethylene/Vinyl Acetate Copolymer | EVA1 | Comonomer content 18%, Density 0.94 g/cm³ Melt Flow Index 0.7 g/10 min (Cond. 190°C / 2.16 kg), Melting Pnint 87°C |
| 1003 VN4 Total Petrochemicals | Ethylene/Vinyl Acetate Copolymer | EVA2 | Comonomer content 13.5%, Density 0.935 g/cm³ Melt Flow Index 0.38 g/10 min (Cond. 190°C / 2.16 kg), Melting Point 93°C |
| ESCORENE ULTRA FL00119 | Ethylene/Vinyl Acetate Copolymer | EVA3 | Comonomer content 19%, Density 0.94 g/cm³ Melting Point 83°C |
| Bynel® 39E660, DuPont | Maleic Anhydride-Modified Ethylene/Vinyl Acetate Copolymer | m-EVA1 | Comonomer content 11,8%, Density 0.943 g/cm³ Melt Flow Index 2.5 g/10 min (Cond. 190°C / 2.16 kg), Melting Point: 95°C Vicat softening point 72°C |
| Bynel® 3101, DuPont | Acid/Acrylate-Modified Ethylene/Vinyl Acetate Copolymer | m-EVA2 | Comonomer content 18.4%, Density 0.93 g/cm³ Melt Flow Index 3.2 g/10 min (Cond. 190°C / 2.16 kg), Melting Point: 87°C Vicat softening point 65°C |
| Bynel® CXA 21 E787 DuPont | Maleic Anhydride-Modified Ethylene/Methyl Acrylate Copolymer | m-EMA | Density 0.93 g/cm³, Melt Flow Index 1.6 g/10 min (Cond. 190°C/2.16kg), Melting Point 92°C |
| Admer® NF 538E | Modified Very Low Density Polyethylene | m-VLDPE | Density 0.91 g/cm³ Melt Flow Index 4.1 g/10 min (Cond. 190°C / 2.16 kg), |
| Nucrel® 1202 HC DuPont | Ethylene/Methacrylic Acid Copolymer | EMAA | Comonomer content 12% Density 0.94 g/cm³, Melt Flow Index: min 1.2g/10min; max 1.8 g/10 min, (Con. 190°C / 2.16 kg), Melting Point 95°C. |
| Eltex® PKS 350 Ineos | Polypropylene, Propylene/Ethylene/Butene Copolymer | PEB1 | Density: 0.895 g/cm³, Melt Flow Index 5 g/10 min (Cond. 230°C / 2.16 kg) Melting Point: 131°C |
| Eltex® PKS 359 Ineos | Polypropylene, Propylene/Ethylene/Butene Copolymer | PEB2 | Density 0.895 g/cm³, Melt Flow Index 5 g/10 min (Cond. 230°C / 2.16 kg), Melting Point 131°C |
| Infuse® 9100 Dow | Ethylene/octene olefin block copolymer | OBC1 | Density 0.877 g/cm³, Melt Flow Index 1 g/10 min (Cond. 190°C/2.16 kg), Melting Point 120°C |
| Infuse® 9500 Dow | Ethylene/octene olefin block copolymer | OBC2 | Density 0.877 g/cm³, Melt Flow Index 5 g/10 min (Cond. 190°C/2.16 kg), Melting Point 122°C Hard segments: 25 wt % C₈ in soft segments: 18 mol % C₈ in hard segments: <0,9 mol % |
| Admer® QF551E Mitsui Chemical | Maleic Anhydride-Modified Polypropylene Random copolymer | m-PEC | Density 0.89 g/cm³, Melt Flow Index 5.2 g/10 min (Cond. 230°C / 2.16 kg) |
| Nordel® IP 4725P Dow | Ethylene-Propylene-diene copolymer | EPDM | Density 0.88 g/cm³, Melt Flow Index 1.5 g/10 min (Cond. 230°C / 2.16 kg), |
| Grilon® CF6S EMS-Grivory | Polyamide 6/12 | PA1 | Density 1.05 g/cm³, Melt Flow Index 5.75 g/10 min (Cond. 230°C / 2.16 kg), Melting Point 130°C |
| Ultramid C33 L01 BASF | Polyamide 6/66 | PA2 | Density 1.12 g/cm³, Melting Point 196°C |
| Elastollon® 685-A10N BASE | Polyurethane elastomer | PU | Density 1.21 g/cm³ |

The layer arrangement, layer composition, and layer thickness for the films of Examples 1 through 21 were as set forth in Table 2, below.

**Table 2**

| | LAYERS | | | | | |
|---|---|---|---|---|---|---|
| Ex. No. | Layer 1 (inside) | Layers 2 & 3 | Layer 4 | Layer 5 | Layer 6 | Layers 7&8 (outside) |
| 1 (W) | | 30% LLDPE1 | | | | |
| | 80% sscPE1 | 30% EMAA | EVA1 | PVDC-MA | 70%EVA1 | 85% PEB1 |
| | 20% sscPE2 | 40% LLDPE2 | | (4.6 µm) | 30% m-EVA1 | 15% OBC1 |
| | (5.0 µm) | (5.1 µm, x 2) | (3.7 µm) | | (2.5 µm) | (3.7 µm, x 2) |
| 2(W) | 80% sscPE1 | 30% LLDPE1 | | | | |
| | 20% sscPE2 | 30% EMAA | EVA1 | PVDC-MA | 70%EVA1 | 75% PEB1 |
| | (5.0 µm) | 40% LLDPE2 | | (4.6 µm) | 30% m-EVA1 | 25% OBC1 |
| | | (5.1 µm, x 2) | (3.7 µm) | | (2.5 µm) | (3.7 µm, x 2) |
| 3 (C) | 80% sscPE1 | 30% LLDPE1 | | | | |
| | 20% sscPE2 | 30% EMAA | EVA1 | PVDC-MA | 70%EVA1 | OBC1 |
| | (5.0 µm) | 40% LLDPE2 | | | 30% m-EVA1 | |
| | | (5.1 µm, x 2) | (3.7 µm) | (4.6 µm) | (2.5 µm) | (3.7 µm, x 2) |
| 4 (W) | 80% sscPE1 | 30% LLDPE1 | | | | |
| | 20% sscPE2 | 30% EMAA | EVA1 | PVDC-MA | 70%EVA1 | 85% PEB1 |
| | | 40% LLDPE2 | | | 30% m-EVA1 | 15% OBC2 |
| | (5.0 µm) | (5.1 µm, x 2) | (3.7 µm) | (4.6 µm) | (2.5 µm) | (3.7 µm, x 2) |
| 5 (W) | | 30% LLDPE1 | | | | |
| | 80% sscPE1 | 30% EMAA | EVA1 | PVDC-MA | 70%EVA1 | 75% PEB1 |
| | 20% sscPE2 | 40% LLDPE2 | | | 30% m-EVA1 | 25% OBC2 |
| | (5.0 µm) | (5.1 µm, x 2) | (3.7 µm) | (4.6 µm) | (2.5 µm) | (3.7 µm, x 2) |
| 6 (C) | | 30% LLDPE1 | | | | |
| | 80% sscPE1 | 30% EMAA | EVA1 | PVDC-MA | 70%EVA1 | LLDPE2 |
| | 20% sscPE2 | 40% LLDPE2 | | | 30% m-EVA1 | |
| | (5.0 µm) | (5.1 µm, x 2) | (3.7 µm) | (4.6 µm) | (2.5 µm) | (3.7 µm, x 2) |
| 7 (C) | | 30% LLDPE1 | | | | |
| | 80% sscPE1 | 30% EMAA | EVA1 | PVDC-MA | 70%EVA1 | PEB1 |
| | 20% sscPE2 | 40% LLDPE2 | | | 30% m-EVA1 | |
| | (5.0 µm) | (5.1 µm, x 2) | (3.7 µm) | (4.6 µm) | (2.5 µm) | (3.7 µm, x 2) |
| 8 (C) | | 30% LLDPE1 | | | | |
| | 80% sscPE1 | 30% EMAA | EVA1 | PVDC-MA | 70%EVA1 | 75% PEB1 |
| | 20% sscPE2 | 40% LLDPE2 | | | 30% m-EVA1 | 25% EPDM |
| | (5.0 µm) | (5.1 µm, x 2) | (3.7 µm) | (4.6 µm) | (2.5 µm) | (3.7 µm, x 2) |
| 9 (C) | | 30% LLDPE1 | | | | |
| | 80% sscPE1 | 30% EMAA | EVA1 | PVDC-MA | 70%EVA1 | 75% PEB1 |
| | 20% sscPE2 | 40% LLDPE2 | | | 30% m-EVA1 | 25% m-EPC |
| | (5.0 µm) | (5.1 µm, x 2) | (3.7 µm) | (4.6 µm) | (2.5 µm) | (3.7 µm, x 2) |
| 10 (C) | | 30% LLDPE1 | | | | |
| | 80% sscPE1 | 30% EMAA | EVA1 | PVDC-MA | 70%EVA1 | 85% PEB1 |
| | 20% sscPE2 | 40% LLDPE2 | | | 30% m-EVA1 | 15% m-EPC |
| | (5.0 µm) | (5.1 µm, x 2) | (3.7 µm) | (4.6 µm) | (2.5 µm) | (3.7 µm, x 2) |
| 11 (C) | | 30% LLDPE1 | | | | |
| | 80% sscPE1 | 30% EMAA | EVA1 | PVDC-MA | 70%EVA1 | m-EPC |
| | 20% sscPE2 | 40% LLDPE2 | | | 30% m-EVA1 | |
| | (5.0 µm) | (5.1 µm, x 2) | (3.7 µm) | (4.6 µm) | (2.5 µm) | (3.7 µm, x 2) |
| 12 (C) | 80% sscPE1 | 30% LLDPE1 | | | | 85% PEB1 |
| | 20% sscPE2 | 30% EMAA | EVA1 | PVDC-MA | 70%EVA1 | 15% m-EMA |
| | (5.0 µm) | 40% LLDPE2 | | (4.6 µm) | 30% m-EVA1 | |
| | | (5.1 µm, x 2) | (3.7 µm) | | (2.5 µm) | (3.7 µm, x 2) |
| 13(C) | 80% sscPE1 | 30% LLDPE1 | | | | 70% PEB1 |
| | 20% sscPE2 | 30% EMAA | EVA1 | PVDC-MA | 70%EVA1 | 30% m-EMA |
| | (5.0 µm) | 40% LLDPE2 | | (4.6 µm) | 30% m-EVA1 | |
| | | (5.1 µm, x 2) | (3.7 µm) | | (2.5 µm) | (3.7 µm, x 2) |
| 14 (C) | 80% sscPE1 | 30% LLDPE1 | | | | 90% PEB1 |
| | 20% sscPE2 | 30% EMAA | EVA1 | PVDC-MA | 70%EVA1 | 10% PU |
| | (5.0 µm) | 40% LLDPE2 | | (4.6 µm) | 30% m-EVA1 | (3.7 µm, x 2) |
| | | (5.1 µm, x 2) | (3.7 µm) | | (2.5 µm) | |
| 15 (C) | 80% sscPE1 | 30% LLDPE1 | | | | 90% PEB1 |
| | 20% sscPE2 | 30% EMAA | EVA1 | PVDC-MA | 70%EVA1 | 10% m-EVA |
| | (5.0 µm) | 40% LLDPE2 | | (4.6 µm) | 30% m-EVA1 | (3.7 µm, x 2) |
| | | (5.1 µm, x 2) | (3.7 µm) | | (2.5 µm) | |
| 16 (C) | 80% sscPE1 | 30% LLDPE1 | | | | 90% PEB1 |
| | 20% sscPE2 | 30% EMAA | EVA1 | PVDC-MA | 70%EVA1 | 10% PA1 |
| | (5.0 µm) | 40% LLDPE2 | | (4.6 µm) | 30% m-EVA1 | |
| | | (5.1 µm, x 2) | (3.7 µm) | | (2.5 µm) | (3.7 µm, x 2) |
| 17 (C) | 80% sscPE1 | 30% LLDPE1 | | | | |
| | 20% sscPE2 | 30% EMAA | EVA1 | PVDC-MA | 70%EVA1 | PEB2 |
| | (5.0 µm) | 40% LLDPE2 | | (4.6 µm) | 30% m-EVA1 | |
| | | (5.1 µm, x 2) | (3.7 µm) | | (2.5 µm) | (3.7 µm, x 2) |
| 18(C) | Layer 1 | Layer 2 | Layer 3 | Layer 4 | Layer 5 | Layer 6 |
| | 80% sscPE1 | LLDPE3 | EVA2 | PVDC-MA | 90% m-VLDPE | PA2 |
| | 20% sscPE3 | | | | 10% m-EVA2 | |
| | (14.8 µm) | (8.0 µm) | (9 µm)) | (4.8 µm)) | (8.5 µm) | (2.9 µm) |
| 19(W) | Layer 1 | Layer 2 | Layer 3 | Layer 4 | Layer 5 | Layer 6 |
| | | 15% sscPE2 | | | | |
| | 80% sscPE1 | 30%EMAA | EVA1 | PVDC-MA | 70% EVA1 | 85% PEB1 |
| | 20% sscPE2 | 55% LLDPE2 | | | 30% m-EVA1 | 15% OBC1 |
| | (5.7 µm) | (5.8 µm, x2) | (4.2 µm) | (5.1 µm) | (2.9 µm) | (4.3 µm, x 2) |
| 20(W) | Layer 1 | Layer 2 | Layer 3 | Layer 4 | Layer 5 | Layer 6 |
| | | 15% sscPE2 | | | | |
| | 80% sscPE1 | 30%EMAA | EVA3 | PVDC-MA | 70% EVA3 | 85% PEB1 |
| | 20% sscPE4 | 55% LLDPE2 | | | 30% m-EVA1 | 15% OBC1 |
| | (7.8 µm) | (5.8 µm, x 2) | (4.2 µm) | (5.1 µm) | (2.9 µm) | (4.25 µm, x 2 |
| 21 (W) | Layer 1 | Layer 2 | Layer 3 | Layer 4 | Layer 5 | Layer 6 |
| | | 15% sscPE2 | | | | |
| | 80% sscPE1 | 30%EMAA | EVA3 | PVDC-MA | 70% EVA3 | 85% PEB1 |
| | 20% sscPE4 | 55% LLDPE2 | | | 30% LLDPE-md | 15% OBC1 |
| | (7.8 µm) | (5.8 µm, x 2) | (4.2 µm) | (5.1 µm) | (2.9 µm) | (4.25 µm, x 2) |

In Table 2 above, (W) designates an example as a working example, and (C) designates an example as a comparative example. In Examples 1-17 and 19-21 of Table 2, the second and third layers were extruded using the same polymeric blend and were extruded at the same thickness.

In films 1-17 after solid-state orientation, the second layer had a thickness of 5.1 µm and the third layer also had a thickness of 5.1µm. As such, the second and third layers could be considered together as the equivalent of a single layer having a thickness of 10.2µm. Similarly, the seventh and eighth layers were extruded using the same polymeric blend and were extruded at the same thickness. After solid-state orientation, the seventh layer had a thickness of 3.7µm and the eighth layer also had a thickness of 3.7µm. As such, the seventh and eighth layers could be considered together as the equivalent of a single layer having a thickness of 7.4µm.

In film 19 after solid-state orientation, the second layer had a thickness of 5.8 µm and the third layer also had a thickness of 5.8 µm. As such, the second and third layers could be considered together as the equivalent of a single layer having a thickness of 11.6 µm. Similarly, the seventh and eighth layers were extruded using the same polymeric blend and were extruded at the same thickness. After solid-state orientation, the seventh layer had a thickness of 4.3 µm and the eighth layer also had a thickness of 4.3 µm. As such, the seventh and eighth layers could be considered together as the equivalent of a single layer having a thickness of 8.6 µm.

In films 20-21 after solid-state orientation, the second layer had a thickness of 5.8 µm and the third layer also had a thickness of 5.8 µm. As such, the second and third layers could be considered together as the equivalent of a single layer having a thickness of 11.6 µm. Similarly, the seventh and eighth layers were extruded using the same polymeric blend and were extruded at the same thickness. After solid-state orientation, the seventh layer had a thickness of 4.25 µm and the eighth layer also had a thickness of 4.25 µm. As such, the seventh and eighth layers could be considered together as the equivalent of a single layer having a thickness of 8.5 µm.

The films of Examples 1 through 17 and 19 through 21were prepared in accordance with the process illustrated in FIG. 4, described above. Relating the process illustrated in FIG. 4 and the above description of the process of FIG. 4 to the films of Examples 1 through 17 and 19 through 21 set forth in Table 2, above, the substrate included layers 1 through 4, and the coating included layers 5 through 8, in order to provide the substrate portion of the film with the advantages of crosslinking via irradiation, while avoiding the degradation that would have occurred by irradiation of the PVDC-MA oxygen barrier layer. The first layer was the seal layer and the eighth layer was the outer layer to be printed. In the preparation of films 1-17 and 19, the substrate received 64 KGy irradiation; in the preparation of films 20-21, the substrate received 80 KGy irradiation. In the preparation of films 1-17 the solid state orientation in the trapped bubble following the hot bath drew the irradiated, coated tape by 3.9X in the machine direction (MD), and stretched the irradiated, coated tape 4.00X in the transverse direction (TD); in the preparation of films 19-21 the solid state orientation in the trapped bubble following the hot bath drew the irradiated, coated tape by 3.9X in the machine direction (MD), and stretched the irradiated, coated tape 3.9X in the transverse direction (TD).. The lay-flat width of the tape was 113 mm for each of Examples 1 through 17 and 19 through 21, and the lay-flat width of the oriented film tubing was 450 mm for each of Examples 1 through 17 and 19 through 21, which tubing was composed of layers 1 through 8, with each layer having the thickness value in micrometers (µm) set forth in Table 2, above.

The film of Example 18 was prepared in the same manner as for Examples 1-17, except that layers 1, 2, and 3 were the substrate, with layers 4, 5, and 6 being the coating; the substrate was oriented 3.25x in the machine direction and 3x in the transverse direction; the extruded tape had a lay-flat width of 150 mm and the film tubing had a thickness of 48 microns and a lay-flat width of 450 mm.

Measurement and testing of the films of Examples 1 through 21, including a qualitative description of the film extrusion, resulted in the film property data and other information set forth in Table 3, below.

**Table 3**

| Ex. No. | Film Thickness (microns) | MD Free Shrink @ 85°C | TD Free Shrink @ 85°C | Extrusion |
|---|---|---|---|---|
| 1 (W) | 36.4 | 26 | 36 | Stable process |
| 2 (W) | 31.4 | 28 | 34 | Stable process |
| 3 (C) | --- | --- | --- | Sticking issues |
| 4 (W) | 33.6 | 25 | 35 | Stable process |
| 5 (W) | --- | 25 | 35 | process less stable than Example 4 |
| 6(C) | 33.7 | 27 | 38 | Stable process |
| 7(C) | 35.7 | 25 | 38 | Stable process |
| 8(C) | 31.7 | --- | --- | NOT Stable process |
| 9 (C) | 35.2 | 32 | 37 | NOT Stable process |
| 10 (C) | 34.6 | 27 | 36 | Stable process |
| 11 (C) | 38.8 | 28 | 35 | NOT Stable process |
| 12 (C) | 34.5 | 30 | 37 | Stable process |
| 13 (C) | 34.1 | 26 | 37 | Slightly opaque, slightly opaque |
| 14 (C) | 34.4 | 27 | 36 | Slightly opaque, slightly opaque |
| 15 (C) | 32.8 | 23 | 32 | Stable process |
| 16 (C) | 32 | 26 | 37 | Stable process, slightly opaque |
| 17 (C) | 37 | 32 | 38 | Stable process |
| 18 (C) | 47.5 | 30 | 38 | Stable process |
| 19 (W) | 38.1 | 36 | 36 | Very Stable process |
| 20 (W) | 40.1 | 28 | 32 | Very Stable process |
| 21 (W) | 40.1 | 31 | 32 | Very Stable process |

Various films of Examples 1 through 21 were printed and evaluated for ink adhesion and ink abrasion resistance, using the Ink Abrasion Resistance Test described above, and the Ink Adhesion Test described above. Results were reported in Table 4.

**Table 4**

| Ex. No. | Ink Adhesion | Ink Abrasion Resistance | Flow Vac Line Test (% rejects) |
|---|---|---|---|
| 7(C) | Good | Very poor | 100 |
| 18(C) | Good | Good | 60 |
| 1(W) | Good | Excellent | 15 |
| 2(W) | Good | Good | 50 |
| 4 (W) | Good | Excellent | 30 |
| 10 (C) | Good | Very poor | 65 |
| 19 (W) | Good | Excellent | 15 |
| 20 (W) | Good | Excellent | 15 |
| 21 (W) | Good | Excellent | 15 |

Printing was performed using a Flexo press with central impression drum. The outer layer of the tubing was corona treated on the printing press before applying the ink. The generator was set to get a surface tension of 42 dynes/cm.

An image was printed on the outer layer of the tubing. A ten-station Miraflex AM press was used for the production of the printed tubing. Press stations from 1 to 9 were used to apply the inks needed to create the target image; press station 10, the last one, was used to apply the SunProp overprint transparent varnish. Printing inks used were a nitrocellulose / polyurethane type solvent based, supplied by Sun Chemical under the tradename of SunProp. The overprint varnish was the ink extender varnish.

Press running speed was 150 m/min; drying conditions were 70°C at the printing stations, and 45°C in the tunnel. A first white ink layer with 100% coverage was applied onto the outer layer of the films. A second blue ink layer with 100% coverage was applied onto the first white ink layer. A third transparent layer of the overprint varnish with 100% coverage was applied onto the second blue ink layer. A total coverage of 300% was achieved. The printed tubing was then edge trimmed on one side and afterwards opened to get a single wound film to be tested. The rolls so obtained were used for the packaging and lab testing evaluation.

Table 4 also reports the results of the Flow Vac Line Test based on 30 minutes continuous running of a Flow Vac horizontal form fill and seal packaging machine, during which time about 300 packs were formed using rubber dummy products. Ink detachment was evaluated by visual check by 5 panelists. Packages showing unacceptable ink removal were considered as rejects. The percentage of rejects was calculated for each of the tested films.

The Flow Vac machine utilized a first pinch roll at 70°C, two sealing wheels (100°C and 110°C) and a rotary blade at 70°C to cut the film. Transverse sealing was carried out at a temperature of 115°C for 275 milliseconds. The Flow Vac machine was operated at a speed of 18 meters per minute. The rotary vacuum machine (Furukawa) operated using a sealing current of 74 amps and had a sealing speed of 30 packages per minute. The shrink tunnel (Cryovac ST98) was set to 85°C and had shrink time of 2 seconds.

The test was considered to be very demanding and therefore differentiated material performances, in order to forecast performance at customer level.

Example 18C was the current offering in the marketplace. As can be seen from Table 4, the film of the present invention showed good ink adhesion, improved ink abrasion resistance compared to the comparative films and lower reject level at packaging (Flow Vac line test). More particularly, Examples 1, 4 and 19-21 showed an excellent performance, in particular Example 19-21 are characterized by a very stable extrusion process.

## Claims

1. A polymer blend comprising (i) a propylene-based homopolymer or copolymer in an amount of from 75 to 95, weight percent, based on total blend weight, and (ii) an olefin block copolymer in an amount of from 5 to 25, weight percent, based total blend weight, the olefin block copolymer being an ethylene/C₃₋₂₀α-olefin copolymer having a density of from 0.85 to 0.89 g/cm³ and a melt index (190°C, 2.16 kg) of from 0.5 g/10 min to 10 g/10 min.

2. The polymer blend according to Claim 1 wherein the olefin block copolymer has an M_{w}/Mₙ of at least 1.7, the olefin block copolymer having hard segments and soft segments with the hard segments making up from 10 to 40 weight percent based on total olefin block copolymer weight and the hard segments having a comonomer content of less than 3 mole percent, with the soft segments having a comonomer content of from 14 to 28 mole percent.

3. A printed, ink-abrasion resistant multilayer film comprising a first outer layer which is a seal layer, and a second outer layer comprising the polymer blend according to claims 1 or 2.

4. The multilayer film according to Claim 3, wherein the blend contains the propylene-based homopolymer or copolymer in an amount of from 75 to 90 weight percent, based on total layer weight, and the olefin block copolymer in an amount of from 10 to 25 weight percent, based on total layer weight, and the olefin block copolymer is an ethylene/C₄₋₁₂ α-olefin copolymer having a density of from 0.870 to 0.884 g/cm³ and a melt index of from 0.8 g/10 min to 7 g/10 min, the olefin block copolymer having hard segments and soft segments with the hard segments making up from 15 to 30 weight percent based on total olefin block copolymer weight and the hard segments having a comonomer content of less than 2 mole percent, with the soft segments having a comonomer content of from 15 to 20 mole percent.

5. The multilayer film according to Claim 4, wherein the blend contains the propylene-based homopolymer or copolymer in an amount of from 75 to 85 weight percent, based on total layer weight, and the olefin block copolymer in an amount of from 15 to 25 weight percent, based on total layer weight, and the olefin block copolymer is an ethylene/ C₆₋₈ copolymer having a density of from 0.875 to 0.879 g/cm³ and a melt index of from 0.9 g/10 min to 6 g/10 min, and an Mw/Mn of from 1.7 to 3.5, the olefin block copolymer having hard segments and soft segments with the hard segments making up from 23 to 27 weight percent based on total olefin block copolymer weight and the hard segments having a comonomer content of less than 1 mole percent, with the soft segments having a comonomer content of from 17 to 19 mole percent.

6. The multilayer film according to any one of Claims 3 to 5, wherein the olefin block copolymer is an ethylene/octene copolymer having a density of from 0.876 to 0.878 g/cm³ and a melt index of about 4.8 to 5.2 g/10 min.

7. The multilayer film according to any one of Claims 3 to 6, wherein the olefin block copolymer is an ethylene/octene copolymer having a density of from 0.876 to 0.878 g/cm³ and a melt index of about 0.9 to 1.1 g/10 min.

8. The multilayer film according to any one of Claims 3 to 7, further comprising an inner film layer which is between the first and second outer layers, wherein the inner film layer comprises a second blend comprising from 10% to 60% by weight of at least one polymer A selected from the group consisting of ethylene-unsaturated ester copolymers, ethylene-unsaturated acid copolymer and ionomer resin, and from 5% to 50% by weight of at least one polymer B selected among ethylene/α-olefin copolymers having a density from 0.868 to 0.910 g/cm³, preferably from 0.868 to 0.905 g/cm³, and from 30% to 65% by weight of at least a polymer C selected among ethylene/α-olefin copolymers having a density from 0.912 to 0.935 g/cm³, preferably from 0.912 to 0.925 g/cm³ wherein said polymer C has a bimodal molecular weight distribution or is a long-chain branched polymer.

9. The film according to Claim 8, wherein the percentage by weight of the second polymer blend with respect to the whole film is from 5% to 60%, preferably from 10% to 40%, more preferably from 20% to 35%.

10. The film according to any one of Claims 3 to 9 further comprising an internal gas barrier layer comprising at least one gas barrier polymer selected among vinylidene chloride copolymers (PVDC), ethylene-vinyl alcohol copolymers (EVOH), polyamides and acrylonitrile-based copolymers and blends thereof.

11. The film according to any one of Claims 3 to 10, wherein the percentage of free shrink at 85°C (ASTM D2732) in at least one or in both directions is higher than 5%, preferably higher than 10%, more preferably higher than 15%, even more preferably higher than 20%.

12. The film according to any one of Claims 3 to 11, which is a six layer film (40) comprising a first outer sealable layer (44) comprising a polymer selected among ethylene-vinyl acetate copolymers (EVA), homogeneous or heterogeneous linear ethylene/α-olefin copolymers and blends thereof, a second inner layer (42) comprising the blend according to anyone of claims 1 and 2, third and fifth tie layers (48), a fourth gas barrier layer (47) and a sixth outer abuse layer (46).

13. An article for packaging in the form of a seamless film tubing wherein the film is according to any one of Claims 3-12 with the heat-sealing layer being the innermost layer of the tubing, or in the form of a flexible container obtainable by heat-sealing to itself a film according to any one of Claims 3 to 12.

14. A package comprising an article according to Claim 13 and a food product packaged in said article.

15. Use of the packaging film according to any one of Claims 3-14 for the packaging of meat, poultry, cheese, processed and smoked meat, pork and lamb.

## Patentansprüche

1. Polymermischung, umfassend (i) ein Propylen-basiertes Homopolymer oder Copolymer in einer Menge von 75 bis 95 Gewichtsprozent, basierend auf einem Gesamt-Mischungs-Gewicht, und (ii) ein Olefin-Block-Copolymer in einer Menge von 5 bis 25 Gewichtsprozent, basierend auf einem Gesamt-Mischungs-Gewicht, wobei das Olefin-Block-Copolymer ein Ethylen/C₃₋₂₀-α-Olefin-Copolymer mit einer Dichte von 0,85 bis 0,89 g/cm³ und einem Schmelzindex (190°C, 2,16 kg) von 0,5 g/10 min bis 10 g/10 min ist.

2. Polymermischung nach Anspruch 1, wobei das Olefin-Block-Copolymer ein M_{w}/Mₙ von wenigstens 1,7 aufweist, wobei das Olefin-Block-Copolymer harte Segmente und weiche Segmente aufweist, wobei die harten Segmente 10 bis 40 Gewichtsprozent, basierend auf einem Gesamt-Olefin-Block-Copolymer-Gewicht, ausmachen und die harten Segmente einen Comonomer-Gehalt von weniger als 3 Molprozent aufweisen, wobei die weichen Segmente einen Comonomer-Gehalt von 14 bis 28 Molprozent aufweisen.

3. Gedruckter, Tinten-abriebresistenter Mehrschichtfilm, umfassend eine erste äußere Schicht, welche eine Siegelschicht ist, und eine zweite äußere Schicht, umfassend die Polymermischung nach Anspruch 1 oder 2.

4. Mehrschichtfilme nach Anspruch 3, wobei die Mischung das Propylenbasierte Homopolymer oder Copolymer in einer Menge von 75 bis 90 Gewichtsprozent, basierend auf einem Gesamt-Schichtgewicht, und das Olefin-Block-Copolymer in einer Menge von 10 bis 25 Gewichtsprozent, basierend auf einem Gesamt-Schichtgewicht, beinhaltet und das Olefin-Block-Copolymer ein Ethylen/C₄₋₁₂-α-Olefin-Copolymer mit einer Dichte von 0,870 bis 0,884 g/cm³ und einem Schmelzindex von 0,8 g/10 min bis 7 g/10 min ist, wobei das Olefin-Block-Copolymer harte Segmente und weiche Segmente aufweist, wobei die harten Segmente 15 bis 30 Gewichtsprozent, basierend auf einem Gesamt-Olefin-Block-Copolymer-Gewicht, ausmachen und die harten Segmente einen Comonomer-Gehalt von weniger als 2 Molprozent aufweisen, wobei die weichen Segmente einen Comonomer-Gehalt von 15 bis 20 Molprozent aufweisen.

5. Mehrschichtfilm nach Anspruch 4, wobei die Mischung das Propylenbasierte Homopolymer oder Copolymer in einer Menge von 75 bis 85 Gewichtsprozent, basierend auf einem Gesamt-Schichtgewicht, und das Olefin-Block-Copolymer in einer Menge von 15 bis 25 Gewichtsprozent, basierend auf einem Gesamt-Schichtgewicht, beinhaltet und das Olefin-Block-Copolymer ein Ethylen/C₆₋₈-Copolymer mit einer Dichte von 0,875 bis 0,879 g/cm³ und einem Schmelzindex von 0,9 g/10 min bis 6 g/10 min und einem M_{w}/Mₙ von 1,7 bis 3,5 ist, wobei das Olefin-Block-Copolymer harte Segmente und weiche Segmente aufweist, wobei die harten Segmente 23 bis 27 Gewichtsprozent, basierend auf einem Gesamt-Olefin-Block-Copolymer-Gewicht, ausmachen und die harten Segmente einen Comonomer-Gehalt von weniger als 1 Molprozent aufweisen, wobei die weichen Segmente einen Comonomer-Gehalt von 17 bis 19 Molprozent aufweisen.

6. Mehrschichtfilm nach einem der Ansprüche 3 bis 5, wobei das Olefin-Block-Copolymer ein Ethylen/Octen-Copolymer mit einer Dichte von 0,876 bis 0,878 g/cm³ und einem Schmelzindex von ungefähr 4,8 bis 5,2 g/10 min ist.

7. Mehrschichtfilm nach einem der Ansprüche 3 bis 6, wobei das Olefin-Block-Copolymer ein Ethylen/Octen-Copolymer mit einer Dichte von 0,876 bis 0,878 g/cm³ und einem Schmelzindex von ungefähr 0,9 bis 1,1 g/10 min ist.

8. Mehrschichtfilm nach einem der Ansprüche 3 bis 7, ferner umfassend eine innere Filmschicht, welche zwischen der ersten und der zweiten äußeren Schicht liegt, wobei die innere Filmschicht eine zweite Mischung umfasst, umfassend 10 Gew% bis 60 Gew% wenigstens eines Polymers A, welches ausgewählt ist aus der Gruppe, bestehend aus Ethylen-ungesättigten Ester-Copolymeren, einem Ethylen-ungesättigten Säure-Copolymer und lonomerharz, und 5 Gew% bis 50 Gew% wenigstens eines Polymers B, ausgewählt aus Ethylen-α-Olefin-Copolymeren mit einer Dichte von 0,868 bis 0,910 g/cm³, vorzugsweise von 0,868 bis 0,905 g/cm³, und 30 Gew% bis 65 Gew% wenigstens eines Polymers C, ausgewählt aus Ethylen-α-Olefin-Copolymeren mit einer Dichte von 0,912 bis 0,935 g/cm³, vorzugsweise von 0,912 bis 0,925 g/cm³, wobei das Polymer C eine bimodale Molekulargewichtsverteilung aufweist oder ein lang-kettiges verzweigtes Polymer ist.

9. Film nach Anspruch 8, wobei der Gewichtsprozentsatz der zweiten Polymermischung in Bezug auf den gesamten Film von 5% bis 60%, vorzugsweise von 10% bis 40%, noch bevorzugter von 20% bis 35%, beträgt.

10. Film nach einem der Ansprüche 3 bis 9, ferner umfassend eine interne Gasbarrierenschicht, umfassend wenigstens ein Gasbarrieren-Polymer, ausgewählt aus Vinyliden-Chlorid-Copolymeren (PVDC), Ethylen-VinylAlkohol-Copolymeren (EVOH), Polyamiden und Acrylnitril-basierten Copolymeren und Mischungen davon.

11. Film nach einem der Ansprüche 3 bis 10, wobei der Prozentsatz eines freien Schrumpfens bei 85°C (ASTM D2732) in wenigstens einer oder in beiden Richtungen größer ist als 5%, vorzugsweise größer ist als 10%, noch bevorzugter größer ist als 15%, und sogar noch bevorzugter größer ist als 20%.

12. Film nach einem der Ansprüche 3 bis 11, welcher ein Sechs-Schicht-Film (40) ist, umfassend eine erste äußere abdichtbare Schicht (44), umfassend ein Polymer, ausgewählt aus Ethylen-Vinyl-Azetat-Copolymeren (EVA), homogenen oder heterogenen Linear-Ethylen/α-Olefin-Copolymeren und Mischungen davon, eine zweite innere Schicht (42), umfassend die Mischung nach einem der Ansprüche 1 und 2, dritte und fünfte Haftvermittlerschichten (48), eine vierte Gasbarrierenschicht (47) und eine sechste äußere Abnutzungsschicht (46).

13. Artikel zum Verpacken in der Form eines nahtlosen Filmschlauches, wobei der Film gemäß einem der Ansprüche 3 - 12, mit der Verschweißungs-Schicht als die innerste Schicht des Schlauchs, ist, oder in der Form eines flexiblen Behälters, welcher durch Verschweißen eines Films gemäß einem der Ansprüche 3 bis 12 an sich selbst erhaltbar ist.

14. Verpackung, umfassend einen Artikel nach Anspruch 13 und ein Lebensmittelprodukt, welches in dem Artikel verpackt ist.

15. Verwendung des Verpackungsfilms nach einem der Ansprüche 3-14 für die Verpackung von Fleisch, Geflügel, Käse, verarbeitetem und geräucherten Fleisch, Schwein und Lamm.

## Revendications

1. Mélange de polymères comprenant (i) un homopolymère ou un copolymère à base de propylène en une quantité de 75 à 95, pour cent en poids, sur la base du poids total du mélange, et (ii) un copolymère séquencé d'oléfine en une quantité de 5 à 25, pour cent en poids, sur la base du poids total du mélange, le copolymère séquencé d'oléfine étant un copolymère d'éthylène/α-oléfine en C₃ à C₂₀ présentant une densité de 0,85 à 0,89 g/cm³ et un indice de fusion (190°C, 2,16 kg) de 0,5 g/10 min à 10 g/10 min.

2. Mélange de polymères selon la revendication 1 dans lequel le copolymère séquencé d'oléfine présente un rapport M_{w}/Mₙ d'au moins 1,7, le copolymère séquencé d'oléfine possédant des segments durs et des segments mous avec les segments durs constituant de 10 à 40 pour cent en poids sur la base du poids total du copolymère séquencé d'oléfine et les segments durs présentant une teneur en comonomères inférieure à 3 pour cent en mole, avec les segments mous présentant une teneur en comonomères de 14 à 28 pour cent en mole.

3. Film multicouche, imprimé par l'encre résistant à l'abrasion comprenant une première couche externe qui est une couche d'étanchéité, et une seconde couche externe comprenant le mélange de polymères selon les revendications 1 ou 2.

4. Film multicouche selon la revendication 3, dans lequel le mélange contient l'homopolymère ou le copolymère à base de propylène en une quantité de 75 à 90 pour cent en poids, sur la base du poids total de la couche, et le copolymère séquencé d'oléfine en une quantité de 10 à 25 pour cent en poids, sur la base du poids total de la couche, et le copolymère séquencé d'oléfine étant un copolymère d'éthylène/α-oléfine en C₄ à C₁₂ présentant une densité de 0,870 à 0,884 g/cm³ et un indice de fusion de 0,8 g/10 min à 7 g/10 min, le copolymère séquencé d'oléfine possédant des segments durs et des segments mous avec les segments durs constituant de 15 à 30 pour cent en poids sur la base du poids total du copolymère séquencé d'oléfine et les segments durs présentant une teneur en comonomères inférieure à 2 pour cent en mole, avec les segments mous présentant une teneur en comonomères de 15 à 20 pour cent en mole.

5. Film multicouche selon la revendication 4, dans lequel le mélange contient l'homopolymère ou le copolymère à base de propylène en une quantité de 75 à 85 pour cent en poids, sur la base du poids total de la couche, et le copolymère séquencé d'oléfine en une quantité de 15 à 25 pour cent en poids, sur la base du poids total de la couche, et le copolymère séquencé d'oléfine est un copolymère d'éthylène/copolymère en C₆ à C₈ présentant une densité de 0,875 à 0,879 g/cm³ et un indice de fusion de 0,9 g/10 min à 6 g/10 min, et un rapport Mw/Mn de 1,7 à 3,5, le copolymère séquencé d'oléfine possédant des segments durs et des segments mous avec les segments durs constituant de 23 à 27 pour cent en poids sur la base du poids total du copolymère séquencé d'oléfine et les segments durs présentant une teneur en comonomères inférieure à 1 pour cent en mole, avec les segments mous présentant une teneur en comonomères de 17 à 19 pour cent en mole.

6. Film multicouche selon l'une quelconque des revendications 3 à 5, dans lequel le copolymère séquencé d'oléfine est un copolymère d'éthylène/octène présentant une densité de 0,876 à 0,878 g/cm³ et un indice de fusion d'environ 4,8 à 5,2 g/10 min.

7. Film multicouche selon l'une quelconque des revendications 3 à 6, dans lequel le copolymère séquencé d'oléfine est un copolymère d'éthylène/octène présentant une densité de 0,876 à 0,878 g/cm³ et un indice de fusion d'environ 0,9 à 1,1 g/10 min.

8. Film multicouche selon l'une quelconque des revendications 3 à 7, comprenant en outre une couche interne de film qui se situe entre la première et la seconde couches externes, où la couche interne de film comprend un second mélange comprenant de 10% à 60 % en poids d'au moins un polymère A sélectionné dans le groupe constitué des copolymères d'éthylène-ester insaturé, des copolymères d'éthylène-acide insaturé et de résine ionomère, et de 5 % à 50 % en poids d'au moins un polymère B sélectionné parmi les copolymères d'éthylène/α-oléfine présentant une densité de 0,868 à 0,910 g/cm³, préférablement de 0,868 à 0,905 g/cm³, et de 30 % à 65 % en poids d'au moins un polymère C sélectionné parmi les copolymères d'éthylène/α-oléfine présentant une densité de 0,912 à 0,935 g/cm³, préférablement de 0,912 à 0,925 g/cm³ où ledit polymère C présente une distribution bimodale des poids moléculaires ou est un polymère ramifié à longue chaîne.

9. Film selon la revendication 8, dans lequel le pourcentage en poids du second mélange de polymères par rapport au film total est de 5 % à 60 %, préférablement de 10 % à 40 %, plus préférablement de 20 % à 35 %.

10. Film selon l'une quelconque des revendications 3 à 9 comprenant en outre une couche interne formant barrière aux gaz comprenant au moins un polymère formant barrière aux gaz sélectionné parmi les copolymères de chlorure de vinylidène (PVDC), les copolymères d'éthylène-alcool de vinyle (EVOH), les polyamides et les copolymères à base d'acrylonitrile et leurs mélanges.

11. Film selon l'une quelconque des revendications 3 à 10, dans lequel le pourcentage de rétrécissement libre à 85°C (ASTM D2732) dans au moins l'un ou les deux sens est supérieur à 5%, préférablement supérieur à 10%, plus préférablement supérieur à 15 %, même plus préférablement supérieur à 20 %.

12. Film selon l'une quelconque des revendications 3 à 11, qui est un film à six couches (40) comprenant une première couche externe scellable (44) comprenant un polymère sélectionné parmi les copolymères d'éthylène-acétate de vinyle (EVA), les copolymères homogènes ou hétérogènes linéaires d'éthylène/α-oléfine et leurs mélanges, une seconde couche interne (42) comprenant le mélange selon l'une quelconque des revendications 1 et 2, une troisième et une cinquième couches de liaison (48), une quatrième couche formant barrière aux gaz (47) et une sixième couche externe d'usure (46).

13. Article d'emballage se présentant sous la forme d'un tube de film sans joint, le film se présentant selon l'une quelconque des revendications 3 à 12 avec la couche d'étanchéité thermique étant la couche la plus interne du tube, ou sous la forme d'un récipient souple pouvant être obtenu par thermoscellage à lui-même d'un film selon l'une quelconque des revendications 3 à 12.

14. Emballage comprenant un article selon la revendication 13 et un produit alimentaire emballé dans ledit article.

15. Utilisation du film d'emballage selon l'une quelconque des revendications 3 à 14 destiné à l'emballage de la viande, de volaille, de fromage, de viande transformée et fumée, de porc et d'agneau.
